# EUROPEAN PATENT APPLICATION

(11) **EP 3 720 021 A1**
(43) Date of publication of application: **07.10.2020**
(21) Application number: 18903475.4
(22) Date of filing: 30.01.2018
(51) Int. Cl.: H04L 1/00, H04L 1/18, H04W 24/00

(54) **INFORMATION TRANSMISSION METHOD AND DEVICE**

(71) Applicant: HUAWEI TECHNOLOGIES CO., LTD., Shenzhen, Guangdong 518129 (CN)
(72) Inventor: SU, Liyan, Shenzhen, Guangdong 518129 (CN)
(74) Representative: Pfenning, Meinig & Partner mbB
(86) International application number: PCT/CN2018/074580
(87) International publication number: WO 2019/148324

(57) **Abstract**

Embodiments of this application provide an information transmission method and a device, relating to the field of communications technologies, to implement channel information feedback and increase a success rate of channel information feedback. A specific solution includes: receiving, by a first device, first control information sent by a second device; and sending, by the first device to the second device, receiving status information used to indicate whether the first control information is correctly received.

## Description

### TECHNICAL FIELD

This application relates to the field of communications technologies, and in particular, to an information transmission method and a device.

### BACKGROUND

In a long term evolution (Long Term Evolution, LTE) frequency division duplex (Frequency Division Duplex, FDD) system, uplink data and downlink data are transmitted on different carriers. Channels on different carriers are different. That is, an uplink channel and a downlink channel that are used for communication between a base station and UE are different. Therefore, unless the base station feeds back, the UE cannot learn of uplink channel information of the UE; unless the UE feeds back, the base station cannot learn of downlink channel information of the base station. Therefore, it is urgent to put forward a solution for implementing channel information feedback.

### SUMMARY

Embodiments of this application provide an information transmission method and a device, to implement channel information feedback.

According to a first aspect, an embodiment of this application provides an information transmission method. The information transmission method includes: receiving, by a first device, first control information sent by a second device; and sending, by the first device, receiving status information indicating whether the first control information is correctly received.

According to the information transmission method provided in this embodiment of this application, after receiving the first control information sent by the second device, the first device may return the receiving status information of the first control information to the second device, to indicate whether the first device correctly receives the first control information. In this way, the second device may not only send the first control information to the first device, but also determine, based on corresponding feedback information (that is, the receiving status information) received regardless of whether the first control information is correctly received, whether to retransmit the first control information, thereby improving a success rate of correctly receiving the first control information by the first device.

In a possible design of the first aspect, the first control information may be carried in a transport block (Transport Block, TB), and the TB may further include downlink data. In such a design, the first control information is uplink channel information (Channel Information, CI). In other words, in this embodiment of this application, the uplink CI and the downlink data may be bound together and carried in the TB, and transmitted on a PDSCH. In this design, the first device may feed back receiving status information of the uplink CI to the second device by reusing receiving status information (that is, HARQ information) of the TB. If the HARQ information is an acknowledgment (Acknowledgment, ACK), the HARQ information is used to indicate that the uplink CI is correctly received. If the HARQ information is a negative acknowledgment (Negative Acknowledgment, ACK), the HARQ information is used to indicate that the uplink CI is not correctly received.

In another possible design of the first aspect, the first device may determine, based on higher layer signaling, physical layer signaling, or a predefinition, a subframe used to initially transmit the first control information (that is, the uplink CI). The TB is scheduled by using second control information. The second control information is downlink control information (Downlink Control Information, DCI), and the DCI further includes a hybrid automatic repeat request (Hybrid Automatic Repeat Request, HARQ) identifier and a new data indicator (New Data Indicator, NDI) that are used to indicate a subframe used to retransmit the first control information.

HARQ identifiers of an initially transmitted first TB and a retransmitted first TB are the same. In addition, compared with an NDI of a first TB in previous transmission (an initially transmitted or a retransmitted first TB), an NDI of a first TB in current transmission (a retransmitted first TB) does not toggle. It may be understood that because a quantity of HARQ identifiers is limited, the limited HARQ identifiers are periodically reused in a process of transmitting TBs. Therefore, if two TBs share a same HARQ identifier, it is not represented that the two TBs are a same TB. In addition, if a same HARQ identifier is configured for two different TBs, NDIs of the two TBs both toggle. In this embodiment of this application, that an NDI of a TB does not toggle means that the NDI of the TB does not toggle from 1 to 0, or the NDI of the TB does not toggle from 0 to 1.

In another possible design of the first aspect, the first device may determine a subframe offset T and a transmission period P based on an indication of higher layer signaling, or the subframe offset T and the transmission period P may be predefined; then, it is determined that a subframe that meets (K * NF + Index - T)mod(P) = 0 is a subframe used to initially transmit the first control information. mod is a modulo operation symbol, K is a quantity of subframes included in one radio frame, NF is a number of a radio frame in which the subframe is located, and Index is an index number of the subframe.

In another possible design of the first aspect, the DCI further includes a transport block size (Transport Block Size, TBS) of the TB transmitted on the PDSCH. The TBS is used to indicate a size of data (for example, the uplink CI+the downlink data) included in the TB transmitted on the PDSCH; or the TBS is used to indicate a size of the downlink data included in the TB transmitted on the PDSCH. In this design, the first device may further determine a size of the first control information (that is, the uplink CI) based on higher layer signaling or physical layer signaling. In this way, when the TBS is the size of the uplink CI and the downlink data, the first device can obtain the uplink CI and the downlink data from the TB based on the size of the uplink CI. When the TBS is the size of the downlink data, the first device may calculate a sum of the TBS and a size of the uplink CI, decode the TB based on a value obtained through calculation, and obtain the uplink CI and the downlink data from the TB based on the size of the uplink CI.

In another possible design of the first aspect, the first control information may be carried on a physical downlink shared channel (Physical Downlink Shared Channel, PDSCH), and the PDSCH further includes a TB, but the first control information is not carried in any TB. In such a design, the first control information may be uplink CI. The first device may feed back receiving status information of the uplink CI carried on the PDSCH to a network device, by using a preset dedicated PUCCH resource used to transmit receiving status information (that is, HARQ information) of uplink CI.

In another possible design of the first aspect, the first device may determine, based on physical layer signaling, a subframe used to transmit the first control information, where the physical layer signaling further indicates whether the first control information is initially transmitted control information or retransmitted control information.

It should be noted that, in the foregoing designs of the first aspect, the first device is a terminal device, the second device is a network device, the receiving status information is HARQ information, and the first control information is CI.

In another possible design of the first aspect, the first device is a network device, the second device is a terminal device, and the first control information is uplink control information (Uplink Control Information, UCI).

The network device may schedule the terminal device to perform data transmission, to feed back the receiving status information to the terminal device. Alternatively, the network device may schedule the terminal device by using a physical hybrid automatic repeat request indicator channel (Physical Hybrid ARQ Indicator Channel, PHICH), to feed back the receiving status information to the terminal device.

According to a second aspect, an embodiment of this application provides an information transmission method. The information transmission method includes: sending, by a second device, first control information to a first device; and receiving, by the second device, receiving status information sent by the first device, where the receiving status information indicates whether the first control information is correctly received.

According to the information transmission method provided in this embodiment of this application, after the second device sends the first control information to the first device, the first device may return the receiving status information of the first control information to the second device, to indicate whether the first device correctly receives the first control information. In this way, the second device may not only send the first control information to the first device, but also determine, based on corresponding feedback information (that is, the receiving status information) received regardless of whether the first control information is correctly received, whether to retransmit the first control information, thereby improving a success rate of correctly receiving the first control information by the first device.

In a possible design of the second aspect, the first control information is carried in a TB, and the TB further includes downlink data.

In another possible design of the second aspect, the second device may indicate, to the first device by using higher layer signaling or physical layer signaling, a subframe used to initially transmit the first control information; and the second device schedule the TB by using second control information, where the second control information is DCI, the DCI further includes an HARQ identifier and an NDI, and the HARQ identifier and the NDI are used to indicate a subframe used to retransmit the first control information.

In another possible design of the second aspect, the second device may indicate a subframe offset T and a transmission period P to the first device by using higher layer signaling, and then initially transmit the first control information to the first device in a subframe that meets (K ∗ NF + Index - T)mod(P) = 0. First control information transmitted by the second device in different subframes that meet (10 ∗ NF + Index - T)mod(P) = 0 is different. % is a modulo operation symbol, NF is a number of a radio frame in which the subframe is located, K is a quantity of subframes included in one radio frame, and Index is an index number of the subframe.

In another possible design of the second aspect, the second device may indicate a size of the first control information to the first device by using higher layer signaling.

In another possible design of the second aspect, the first control information is carried on a PDSCH. The PDSCH further includes a transport block TB, and the first control information is not carried in any TB.

In another possible design of the second aspect, the second device indicates, to the first device by using physical layer signaling, transmission indication information and a subframe used to transmit the first control information, where the transmission indication information is used to indicate whether the first control information is initially transmitted control information or retransmitted control information.

It should be noted that, in the foregoing designs of the first aspect, the first device is a terminal device, the second device is a network device, the receiving status information is HARQ information, and the first control information is CI.

In another possible design of the first aspect, the first device is a network device, the second device is a terminal device, and the first control information is uplink control information (Uplink Control Information, UCI).

The network device may schedule the terminal device to perform data transmission, to feed back the receiving status information to the terminal device. Alternatively, the network device may schedule the terminal device by using a physical hybrid automatic repeat request indicator channel (Physical Hybrid ARQ Indicator Channel, PHICH), to feed back the receiving status information to the terminal device.

In addition, for technical effects of the second aspect and any possible design of the second aspect, refer to technical effects of different designs in the first aspect. Details are not described herein again.

According to a third aspect, an embodiment of this application provides a device. The device is a first device, and the first device is configured to perform the method in the first aspect and any one of the possible designs of the first aspect in the embodiments of this application. The device includes a receiving unit and a sending unit. The receiving unit is configured to receive first control information sent by a second device. The sending unit is configured to send receiving status information, where the receiving status information indicates whether the receiving unit correctly receives the first control information.

In a possible design of the third aspect, the first control information received by the receiving unit is carried in a TB, and the TB further includes downlink data.

In another possible design of the third aspect, the device further includes a first determining unit. The first determining unit is configured to determine, based on higher layer signaling, physical layer signaling, or a predefinition, a subframe used to initially transmit the first control information. The TB is scheduled by using second control information. The second control information is downlink control information DCI, the DCI further includes an HARQ identifier and an NDI, and the HARQ identifier and the NDI are used to indicate a subframe used to retransmit the first control information.

In another possible design of the third aspect, the first determining unit is specifically configured to: determine a subframe offset T and a transmission period P based on higher layer signaling or a predefinition; and determine that a subframe that meets (K ∗ NF + Index - T)mod(P) = 0 is a subframe used to initially transmit the first control information, where mod is a modulo operation symbol, K is a quantity of subframes included in one radio frame, NF is a number of a radio frame in which the subframe is located, and Index is an index number of the subframe.

In another possible design of the third aspect, the device further includes a second determining unit. The second determining unit is configured to determine a size of the first control information based on higher layer signaling or physical layer signaling.

In another possible design of the third aspect, the first control information received by the receiving unit is carried on a PDSCH, the PDSCH further includes a TB, and the first control information is not carried in any TB.

In another possible design of the third aspect, the first determining unit is configured to determine, based on physical layer signaling, a subframe used to transmit the first control information, and determine whether the first control information is initially transmitted control information or retransmitted control information.

In another possible design of the third aspect, the first device is a terminal device, the second device is a network device, the receiving status information is HARQ information, and the first control information is uplink CI.

According to a fourth aspect, an embodiment of this application provides a device. The device is a second device, and the second device is configured to perform the method in the second aspect and any one of the possible designs of the second aspect in the embodiments of this application. The device includes a sending unit and a receiving unit. The second device sends first control information to a first device, and the second device receives receiving status information sent by the first device, where the receiving status information is used to indicate whether the first control information is correctly received.

In a possible design of the fourth aspect, the first control information is carried in a TB, and the TB further includes downlink data.

In another possible design of the fourth aspect, the sending unit is further configured to: indicate, to the first device by using higher layer signaling or physical layer signaling, a subframe used to initially transmit the first control information; and schedule the TB by using second control information, where the second control information is downlink control information DCI, the DCI further includes a hybrid automatic repeat request HARQ identifier and a new data indicator NDI, and the HARQ identifier and the NDI are used to indicate a subframe used to retransmit the first control information.

In another possible design of the fourth aspect, the sending unit is specifically configured to: indicate a subframe offset T and a transmission period P to the first device by using higher layer signaling, and initially transmit the first control information to the first device in a subframe that meets (K ∗ NF + Index - T)mod(P) = 0. First control information transmitted by the second device in different subframes that meet (10 ∗ NF + Index - T)mod(P) = 0 is different. mod is a modulo operation symbol, NF is a number of a radio frame in which the subframe is located, K is a quantity of subframes included in one radio frame, and Index is an index number of the subframe.

In another possible design of the fourth aspect, the sending unit is further configured to indicate a size of the first control information to the first device by using higher layer signaling.

In another possible design of the fourth aspect, the first control information is carried on a PDSCH, the PDSCH further includes a TB, and the first control information is not carried in any TB.

In another possible design of the fourth aspect, the sending unit is further configured to indicate, to the first device by using physical layer signaling, transmission indication information and a subframe used to transmit the first control information, where the transmission indication information is used to indicate whether the first control information is initially transmitted control information or retransmitted control information.

In another possible design of the fourth aspect, the first device is a terminal device, the second device is a network device, the receiving status information is HARQ information, and the control information is uplink CI.

According to a fifth aspect, an embodiment of this application provides a device. The device is a first device, and the device includes a processor, a memory, and a communications interface. The memory and the communications interface are coupled to the processor, the memory is configured to store computer program code, the computer program code includes a computer instruction, and the memory includes a non-volatile storage medium. When the processor executes the computer instruction, the communications interface is configured to receive first control information sent by a second device, and send receiving status information, where the receiving status information indicates whether the communications interface correctly receives the first control information.

In a possible design of the fifth aspect, the first control information is carried in a TB, and the TB further includes downlink data.

In another possible design of the fifth aspect, the communications interface is further configured to receive higher layer signaling sent by the second device, and the processor is further configured to determine, based on the higher layer signaling or physical layer signaling or a predefinition, a subframe used to initially transmit the first control information. The TB is scheduled by using second control information. The second control information is DCI, the DCI further includes an HARQ identifier and an NDI, and the HARQ identifier and the NDI are used to indicate a subframe used to retransmit the first control information.

In another possible design of the fifth aspect, the processor is specifically configured to: determine a subframe offset T and a transmission period P based on higher layer signaling or a predefinition; and determine that a subframe that meets (K ∗ NF + Index - T)mod(P) = 0 is a subframe used to initially transmit the first control information, where mod is a modulo operation symbol, K is a quantity of subframes included in one radio frame, NF is a number of a radio frame in which the subframe is located, and Index is an index number of the subframe.

In another possible design of the fifth aspect, the processor is further configured to determine a size of the first control information based on higher layer signaling or physical layer signaling.

In another possible design of the fifth aspect, the first control information is carried on a PDSCH, the PDSCH further includes a TB, and the first control information is not carried in any TB.

In another possible design of the fifth aspect, the processor is further configured to determine, based on physical layer signaling, a subframe used to transmit the first control information, and determine whether the first control information is initially transmitted control information or retransmitted control information.

In another possible design of the fifth aspect, the first device is a terminal device, the second device is a network device, the receiving status information is HARQ information, and the first control information is uplink CI.

According to a sixth aspect, an embodiment of this application provides a device. The device is a second device, and the device includes a processor, a memory, and a communications interface. The memory and the communications interface are coupled to the processor, the memory is configured to store computer program code, the computer program code includes a computer instruction, and the memory includes a non-volatile storage medium. When the processor executes the computer instruction, the communications interface is configured to send first control information to a first device, and receive receiving status information sent by the first device, where the receiving status information indicates whether the first control information is correctly received.

In a possible design of the sixth aspect, the first control information is carried in a TB, and the TB further includes downlink data.

In another possible design of the sixth aspect, the communications interface is further configured to send higher layer signaling or physical layer signaling to the first device, where the higher layer signaling or the physical layer signaling is used to indicate a subframe used to initially transmit the first control information; and the communications interface is further configured to send second control information to the first device, where the second control information is used to schedule the TB, the second control information is DCI, the DCI further includes a HARQ identifier and an NDI, and the HARQ identifier and the NDI are used to indicate a subframe used to retransmit the first control information.

In another possible design of the sixth aspect, the communications interface is further configured to indicate a subframe offset T and a transmission period P to the first device by using higher layer signaling; the processor is further configured to determine a subframe that meets (K ∗ NF + Index - T)mod(P) = 0, where mod is a modulo operation symbol, NF is a number of a radio frame in which the subframe is located, K is a quantity of subframes included in one radio frame, and Index is an index number of the subframe; and the communications interface is further configured to initially transmit the first control information to the first device in the subframe that is determined by the processor and that meets (K ∗ NF + Index - T)mod(P) = 0.

In another possible design of the sixth aspect, the communications interface is further configured to indicate a size of the first control information to the first device by using higher layer signaling.

In another possible design of the sixth aspect, the first control information is carried on a PDSCH, the PDSCH further includes a TB, and the first control information is not carried in any TB.

In another possible design of the sixth aspect, the communications interface is further configured to indicate, to the first device by using physical layer signaling, transmission indication information and a subframe used to transmit the first control information, where the transmission indication information is used to indicate whether the first control information is initially transmitted control information or retransmitted control information.

In another possible design of the sixth aspect, the first device is a terminal device, the second device is a network device, the receiving status information is HARQ information, and the control information is uplink channel information CI.

According to a seventh aspect, an embodiment of this application provides a computer storage medium. The computer storage medium includes a computer instruction, and when the computer instruction is run on a device, the device is enabled to perform the method according to any one of the first aspect, the second aspect, and the possible design of the first aspect and the second aspect.

According to an eighth aspect, an embodiment of this application provides a computer program product. When the computer program product is run on a computer, the computer is enabled to perform the method according to any one of the first aspect, the second aspect, and the possible designs of the first aspect and the second aspect.

For technical effects of any one of the third aspect, the fourth aspect, the fifth aspect, the sixth aspect, the possible designs of the third aspect, the fourth aspect, the fifth aspect, and the sixth aspect, the seventh aspect, and the eighth aspect in the embodiments of this application, refer to technical effects of different designs in the first aspect. Details are not described herein again.

### BRIEF DESCRIPTION OF DRAWINGS

FIG. 1 is a simplified schematic diagram of a system architecture according to an embodiment of this application;
FIG. 2 is a schematic diagram of a hardware structure of a base station according to an embodiment of this application;
FIG. 3 is a schematic diagram of a hardware structure of UE according to an embodiment of this application;
FIG. 4 is a schematic principle diagram of a method for feeding back UCI by UE to a base station according to an embodiment of this application;
FIG. 5 is a flowchart 1 of an information transmission method according to an embodiment of this application;
FIG. 6 is a schematic principle diagram 1 of an information transmission method according to an embodiment of this application;
FIG. 7 is a flowchart 2 of an information transmission method according to an embodiment of this application;
FIG. 8 is a schematic principle diagram 1 of initial transmission and retransmission of a TB according to an embodiment of this application;
FIG. 9 is a schematic principle diagram 2 of initial transmission and retransmission of a TB according to an embodiment of this application;
FIG. 10 is a schematic principle diagram 3 of initial transmission and retransmission of a TB according to an embodiment of this application;
FIG. 11 is a flowchart 3 of an information transmission method according to an embodiment of this application;
FIG. 12 is a schematic principle diagram 4 of initial transmission and retransmission of a TB according to an embodiment of this application;
FIG. 13 is a schematic principle diagram 2 of an information transmission method according to an embodiment of this application;
FIG. 14 is a flowchart 4 of an information transmission method according to an embodiment of this application;
FIG. 15 is a flowchart 5 of an information transmission method according to an embodiment of this application;
FIG. 16 is a schematic principle diagram 1 of initial transmission and retransmission of uplink CI according to an embodiment of this application;
FIG. 17 is a schematic principle diagram 2 of initial transmission and retransmission of uplink CI according to an embodiment of this application;
FIG. 18 is a schematic structural composition diagram 1 of a device according to an embodiment of this application; and
FIG. 19 is a schematic structural composition diagram 2 of a device according to an embodiment of this application.

### DESCRIPTION OF EMBODIMENTS

Terms "first", "second", and the like in embodiments of this application are used to distinguish between different objects or between different processing on a same object, but are not used to describe a specific order of the objects. For example, a first TB and a second TB are different TBs.

An information transmission method provided in the embodiments of this application may be applied to a process of feeding back, by a second device, first control information (for example, uplink CI) to a first device.

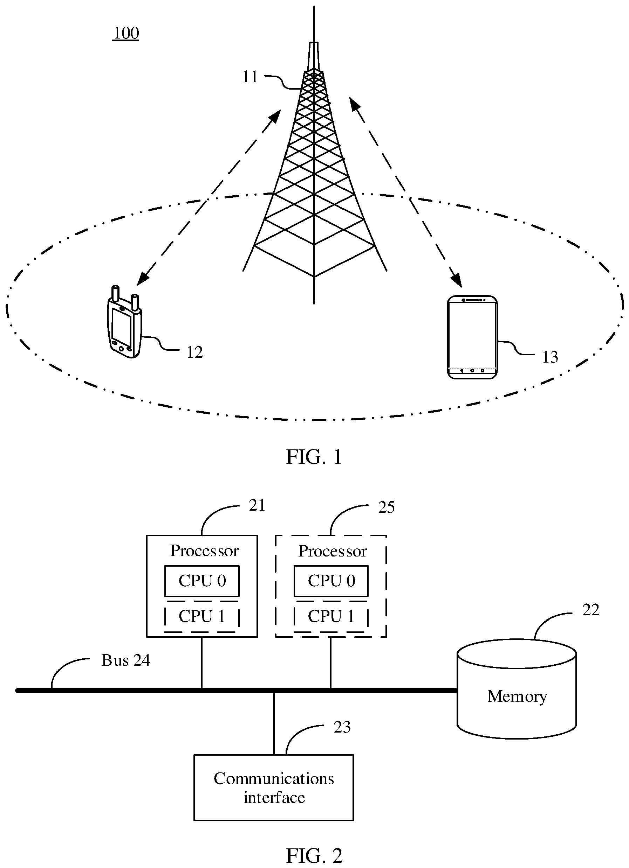

FIG. 1 is a simplified schematic diagram of a system architecture according to an embodiment of this application. The system architecture includes a network device and one or more terminal devices. As shown in FIG. 1, the system architecture may include a network device 11, a terminal device 12, and a terminal device 13.

In this embodiment of this application, devices in the system architecture shown in FIG. 1 are described by using interaction between the network device 11 and the terminal device 12 as an example.

In a first application scenario, the network device 11 is configured to send downlink control information (including uplink CI) to the terminal device 12; the terminal device 12 is configured to receive the downlink control information sent by the network device 11, and feed back receiving status information (for example, HARQ information) of the downlink control information to the network device 11.

In a second application scenario, the terminal device 12 is configured to send uplink control information, for example, UCI, to the network device 11; the network device 11 is configured to receive the UCI sent by the terminal device 12, and feed back receiving status information of the UCI to the terminal device 12, where the receiving status information of the UCI is used to indicate whether the UCI is correctly received.

This application may be applied to systems such as an NR system and an LTE system. The network device 11 may be specifically a base station. The base station may be a base station (Base Station, BS), a base station controller, or the like used for wireless communication. The base station may also be referred to as a wireless access point, a transceiver station, a relay station, a cell, a transmit and receive port (Transmit and Receive Port, TRP), or the like. Specifically, the network device 11 is an apparatus that is deployed in a wireless access network and that is configured to provide a wireless communication function for a terminal device. The network device 11 may be connected to the terminal device, receive data sent by the terminal device, and send the data to a core network device. Main functions of the network device 11 include one or more of the following functions: radio resource management, Internet Protocol (Internet Protocol, IP) header compression and user data flow encryption, MME selection when user equipment is attached, user plane data routing to a serving gateway (Service Gateway, SGW), organizing and sending of a paging message, organizing and sending of a broadcast message, measurement for mobility or scheduling and configuration of a measurement report, and the like. The network device 11 may include various forms of cellular base stations, home base stations, cells, wireless transmission points, macro base stations, micro base stations, relay stations, wireless access points, and the like.

In systems using different radio access technologies, names of base stations may be different. For example, in an LTE system, a base station is referred to as an evolved NodeB (evolved NodeB, eNB or eNodeB). In a third generation telecommunications (the third Generation Telecommunication, 3G) system, a base station is referred to as a NodeB (Node B). In an NR system, a base station is referred to as a gNB, a CU, a DU, or the like. In a local wireless access system, a base station is referred to as an access point (Access Point). As communications technologies evolve, the name may change. In addition, in another possible case, the network device 11 may be another apparatus that provides the wireless communication function for the terminal device. For ease of description, in the embodiments of this application, an apparatus that provides a wireless communication function for the terminal device are referred to as a network device.

The terminal device 12 and the terminal device 13 both refer to devices that include wireless receiving and sending functions and that may cooperate with a network side device such as an access network device and/or a core network device to provide a communication service for a user. Both the terminal device 12 and the terminal device 13 may be a wireless terminal or a wired terminal. The wireless terminal may refer to a device that provides a user with voice and/or data connectivity, a handheld device with a radio connection function, or another processing device connected to a radio modem. The wireless terminal may communicate with one or more core networks or the Internet by using a radio access network (for example, a radio access network, RAN). The wireless terminal may be a mobile terminal, such as a mobile phone (or referred to as a "cellular" phone), a computer, or a data card. For example, the mobile device may be a portable, pocket-sized, handheld, computer built-in, or in-vehicle mobile apparatus that exchanges languages and/or data with the radio access network. For example, it may be a device such as a personal communication service (Personal Communication Service, PCS) phone, a cordless telephone set, a session initiation protocol (SIP) phone, a wireless local loop (WLL, Wireless Local Loop) station, or a personal digital assistant (Personal Digital Assistant, PDA), and or the like. The wireless terminal may also be referred to as a system, a subscriber unit (Subscriber Unit), a subscriber station (Subscriber Station), a mobile station (Mobile Station), a mobile station (Mobile), a remote station (Remote Station), an access point (Access Point), a remote terminal (Remote Terminal), an access terminal (Access Terminal), a user terminal (User Terminal), a user agent (User Agent), a subscriber station (Subscriber Station, SS), customer premises equipment (Customer Premises Equipment, CPE), UE, or the like. For example, the terminal device may be a mobile phone, a tablet computer, a notebook computer, an ultra-mobile personal computer (Ultra-mobile Personal Computer, UMPC), a netbook, a personal digital assistant (Personal Digital Assistant, PDA), or the like. In an embodiment, FIG. 1 uses an example in which the terminal device 12 and the terminal device 13 included in the system architecture of this application are both mobile phones.

FIG. 2 is a schematic composition diagram of a base station according to an embodiment of this application. As shown in FIG. 2, the base station may include at least one processor 21, a memory 22, a communications interface 23, and a bus 24.

The components of the base station are described below in detail with reference to FIG. 2.

The processor 21 is a control center of the base station, and may be a processor, or may be a general name of a plurality of processing elements. For example, the processor 21 may be a central processing unit (Central Processing Unit, CPU), or an application-specific integrated circuit (Application Specific Integrated Circuit, ASIC), or may be configured as one or more integrated circuits implementing this embodiment of this application, for example, one or more microprocessors (Digital Signal Processor, DSP) or one or more field programmable gate arrays (Field Programmable Gate Array, FPGA).

The processor 21 may perform various functions of the base station by running or executing a software program stored in the memory 22 and by invoking data stored in the memory 22.

During specific implementation, in an embodiment, the processor 21 may include one or more CPUs, for example, a CPU 0 and a CPU 1 shown in FIG. 2.

During specific implementation, in an embodiment, the base station may include a plurality of processors, for example, the processor 21 and a processor 25 shown in FIG. 2. Each of the processors may be a single-core processor (single-CPU) or may be a multi-core processor (multi-CPU). The processor herein may refer to one or more devices, circuits, and/or processing cores configured to process data (for example, a computer program instruction).

The memory 22 may be, but is not limited to, a read-only memory (Read-Only Memory, ROM) or another type of static storage device that can store static information and an instruction, a random access memory (Random Access Memory, RAM) or another type of dynamic storage device that can store information and an instruction, an electrically erasable programmable read-only memory (Electrically Erasable Programmable Read-Only Memory, EEPROM), a compact disc read-only memory (Compact Disc Read-Only Memory, CD-ROM) or another compact disc storage medium, an optical disc storage medium (including a compact disc, a laser disc, an optical disc, a digital versatile disc, and a Blu-ray disc, or the like), a magnetic disk storage medium or another magnetic storage device, or any other medium that can be used to carry or store expected program code in a form of an instruction or a data structure and can be accessed by a computer. The memory 22 may exist independently, and is connected to the processor 21 by using the bus 24. The memory 22 may alternatively be integrated with the processor 21.

The memory 22 is configured to store a software program that implements the solution of this application, and the processor 21 controls execution.

The communications interface 23 is configured to communicate with another device or a communications network. For example, the communications interface 23 is configured to communicate with the communications network, such as an ethernet, a radio access network (radio access network, RAN), or a wireless local area network (Wireless Local Area Networks, WLAN). The communications interface 23 may include all or a part of a baseband processor, and may optionally include an RF processor. The RF processor is configured to send and receive an RF signal. The baseband processor is configured to process a baseband signal converted from the RF signal or a baseband signal to be converted into the RF signal.

The bus 24 may be an industry standard architecture (Industry Standard Architecture, ISA) bus, a peripheral component interconnect (Peripheral Component Interconnect, PCI) bus, an extended industry standard architecture (Extended Industry Standard Architecture, EISA) bus, or the like. The bus may be an address bus, a data bus, a control bus, and the like. For ease of representation, only one thick line is used to represent the bus in FIG. 2, but this does not mean that there is only one bus or only one type of bus.

A device structure shown in FIG. 2 constitutes no limitation to the base station. More or fewer components than those shown in the figure may be included, or some components may be combined, or different component arrangements may be used.

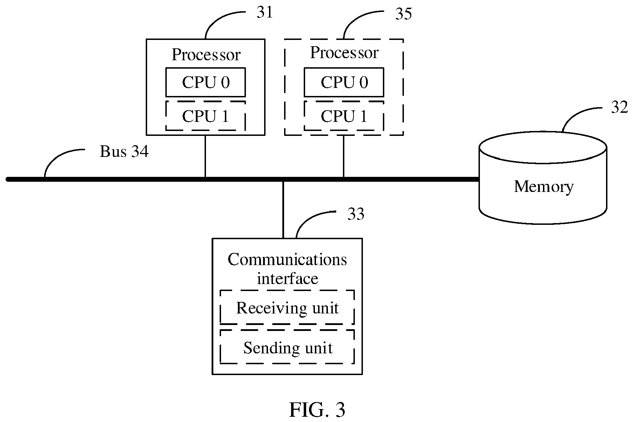

FIG. 3 is a schematic composition diagram of UE according to an embodiment of this application. As shown in FIG. 3, the UE may include at least one processor 31, a memory 32, a communications interface 33, and a bus 34.

The following describes each component of the UE in detail with reference to FIG. 3.

The processor 31 may be a processor, or may be a general name of a plurality of processing elements. For example, the processor 31 may be a general-purpose CPU, an ASIC, or one or more integrated circuits configured to control program execution of the solution of this application, for example, one or more DSPs or one or more FPGAs. The processor 31 may implement various functions of the UE by running or executing a software program stored in the memory 32 and invoking data stored in the memory 32.

During specific implementation, in an embodiment, the processor 31 may include one or more CPUs, For example, as shown in FIG. 3, the processor 31 includes a CPU 0 and a CPU 1.

During specific implementation, in an embodiment, the UE may include a plurality of processors. For example, as shown in FIG. 3, the UE includes the processor 31 and a processor 35. Each of these processors may be a single-CPU, or may be a multi-CPU. The processor herein may refer to one or more devices, circuits, and/or processing cores configured to process data (for example, a computer program instruction).

The memory 32 may be, but is not limited to, a ROM or another type of static storage device that can store static information and a static instruction, a RAM or another type of dynamic storage device that can store information and an instruction, an EEPROM, a CD-ROM or another compact disc storage medium, an optical disc storage medium (including a compact disc, a laser disk, an optical disc, a digital versatile disc, a Blu-ray disc, or the like), a magnetic disk storage medium or another magnetic storage device, or any other medium that can be used to carry or store expected program code in a form of an instruction or a data structure and can be accessed by a computer. The memory 32 may exist independently, and is connected to the processor 31 by using the bus 34. The memory 32 may alternatively be integrated with the processor 31.

The communications interface 33 is configured to communicate with another device or a communications network, such as an ethernet, a RAN, or a WLAN. The communications interface 33 may include a receiving unit for implementing a receiving function and a sending unit for implementing a sending function.

The bus 34 may be an ISA bus, a PCI bus, an EISA bus, or the like. The bus may be an address bus, a data bus, a control bus, and the like. For ease of representation, only one thick line is used to represent the bus in FIG. 3, but this does not mean that there is only one bus or only one type of bus.

A device structure shown in FIG. 3 constitutes no limitation to the UE. More or fewer components than those shown in the figure may be included, or some components may be combined, or different component arrangements may be used. Although not shown, the UE may further include a battery, a camera, a Bluetooth module, a global positioning system (Global Position System, GPS) module, a display, and the like. Details are not described herein.

Terms in the embodiments of this application are described below.
(1) Time unit in time domain: In the embodiments of this application, a resource used by the network device and the terminal device to transmit first control information (for example, uplink CI) may be divided into a plurality of time units in time domain. In addition, in the embodiments of this application, the plurality of time units may be consecutive, or a preset interval may be set between some adjacent time units. This is not particularly limited in the embodiments of this application. In the embodiments of this application, a length of a time unit may be randomly set. This is not particularly limited in the embodiments of this application. For example, 1 time unit may include one or more subframes, 1 time unit may include one or more slots, 1 time unit may include one or more mini-slots, 1 time unit may include one or more symbols, one time unit may include one or more transmission time intervals (Transmission Time Interval, TTI), 1 time unit may include one or more short transmission time intervals (short Transmission Time Interval, sTTI), or 1 time unit may correspond to one time mode. For example, in a first time mode, a transmission time interval is 2 symbols or 3 symbols; in a second mode, a transmission time interval is 7 symbols. The mini-slot includes one or more symbols, and the mini-slot is less than or equal to a slot. The slot herein may be a mini-slot in a system with a 60 kHz subcarrier spacing, or may be a mini-slot in a system with a 15 kHz subcarrier spacing. This is not limited in the embodiments of this application.
   One slot includes one or more symbols, and the slot herein may be a slot in a system with a 60 kHz subcarrier spacing, or may be a slot in a system with a 15 kHz subcarrier spacing. This is not limited in the embodiments of this application.
   A TTI is a parameter commonly used in a current communications system (for example, an LTE system), and is a scheduling unit for scheduling data transmission in a radio link. In the prior art, it is usually considered that 1 TTI=1 ms. In other words, one TTI is one subframe (subframe) or two slots (slot). The TTI is a basic time unit in radio resource management (such as scheduling).
   In a communications network, a latency is a key performance indicator and affects user experience. With development of communications protocols, a scheduling interval of a physical layer that has a most obvious impact on the latency becomes smaller. In initial wideband code division multiple access (Wideband Code Division Multiple Access, W-CDMA), the scheduling interval is 10 ms; in high-speed packet access (High-Speed Packet Access, HSPA), the scheduling interval is shortened to 2 ms; in the LTE system, the time interval (namely the TTI) is shortened to 1 ms. Because of a service requirement for a low latency, a shorter TTI frame structure is required at a physical layer, to further shorten the scheduling interval, thereby improving user experience. For example, a TTI length in the LTE system may be shortened from 1 ms to a range of 1 symbol (symbol) to 1 slot (including 7 symbols). The foregoing symbol may be an orthogonal frequency division multiplexing (Orthogonal Frequency Division Multiplexing, OFDM) symbol or a single carrier-frequency division multiple access (Single Carrier-Frequency Division Multiple Access, SC-FDMA) symbol in the LTE system, or may be a symbol in another communications system. For another example, duration of a transmission unit in a 5G communications system is also shorter than or equal to 1 ms.
   In data transmission based on a TTI whose duration is 1 ms in the LTE system, generally a round-trip time (Round-Trip Time, RTT) of data transmission is 8 ms. For example, compared with existing scheduling with a TTI whose length is 1 ms, a processing time is shortened proportionally, that is, the existing RTT latency is still followed. During data transmission based on an sTTI whose length is 0.5 ms, an RTT of the data transmission is 4 ms. A latency can be reduced by a half compared with data transmission based on the TTI whose length is 1 ms, thereby improving user experience.
   A TTI whose length is less than 1 ms may be referred to as an sTTI. For example, in an LTE system, the length of the sTTI may be any one of 1 to 7 symbols, or the length of the sTTI may be a combination of at least two different lengths of 1 to 7 symbols. For example, 6 sTTIs are included in 1 ms, and lengths of the sTTIs may be separately 3 symbols, 2 symbols, 2 symbols, 2 symbols, 2 symbols, and 3 symbols; or 4 sTTIs are included in 1 ms, and lengths of the sTTIs may be separately 3 symbols, 4 symbols, 3 symbols, and 4 symbols. The lengths of the sTTIs may be a combination of other different lengths. In addition, a length of an uplink sTTI may be the same as a length of a downlink sTTI. For example, both the length of the uplink sTTI and the length of the downlink sTTI are 2 symbols. Alternatively, the length of the uplink sTTI may be longer than the length of the downlink sTTI. For example, the length of the uplink sTTI is 7 symbols, and the length of the downlink sTTI is 2 symbols. Alternatively, the length of the uplink sTTI may be shorter than the length of the downlink sTTI. For example, the length of the uplink sTTI is 4 symbols, and the length of the downlink sTTI is 1 subframe.
   A data packet whose TTI length is less than 1 subframe or 1 ms is referred to as a short-TTI data packet. Short TTI data transmission may be in continuous distribution or discontinuous distribution in frequency domain. It should be noted that in consideration of backward-compatibility, data transmission based on the TTI whose length is 1 ms and data transmission based the sTTI may coexist in a system.
   In the embodiments of this application, the TTI (whose length is, for example, 1 ms or longer than 1 ms) and the sTTI that are specified for the LTE system may be collectively referred to as TTIs. In addition, in the embodiments of this application, the length of the TTI may be changed based on an actual requirement.
   It should be understood that the foregoing listed structures of the time unit are merely examples for description. This is not particularly limited in the embodiments of this application. The structure of the time unit may be changed based on an actual requirement. For example, in an LTE system that does not support an sTTI (2 symbols, 3 symbols, 7 symbols, or 1 slot), 1 time unit may be 1 subframe (Subframe). For another example, for an LTE system that supports an sTTI (2 symbols, 3 symbols, 7 symbols, or 1 slot), 1 time unit may include 1 sTTI, in other words, 1 time unit may include 1 slot (Slot), and 1 time unit may include one or more (for example, a quantity is a positive integer less than 7 or a positive integer less than 6) symbols; or 1 time unit may alternatively be 1 subframe.
   It should be noted that in the embodiments of this application, a length used for information transmission (in other words, information transmission duration) in the time unit may be 1 ms, or may be less than 1 ms. Alternatively, with reference to the foregoing descriptions, even though for the LTE system that does not support the sTTI (2 symbols, 3 symbols, 7 symbols, or 1 slot), when the time unit is represented by using a subframe, a length used for downlink information transmission in the time unit may be 1 ms, or may be less than 1 ms. Similarly, a length used for uplink information transmission in the time unit may be 1 ms, or may be less than 1 ms.
   For ease of understanding and description, by way of example but not limitation, a reference signal transmission process in the embodiments of this application is described in detail by using an example in which one time unit includes one sTTI and one sTTI includes two symbols.
   In addition, in the embodiments of this application, resources used by the network device and the terminal device to transmit information may be divided into a plurality of time periods in time domain, and each time period includes one or more time units. By way of example but not limitation, in the embodiments of this application, a time period may be 1 ms or 10 ms. In the embodiments of this application, one time period may include, for example, 6 time units or 2 time units.
(2) HARQ technology: A forward error correction (Forward Error Correction, EFC) technology and an automatic repeat request (Automatic Repeat Request, ARQ) technology are combined. The EFC technology may be used to improve communication trustworthiness. However, in a unidirectional communication channel (for example, an LTE FDD system), when a receive end receives a data packet sent by a transmit end, if the receive end detects an uncorrectable error, the receive end cannot request the transmit end to retransmit the data packet. In the HARQ technology, however, the receive end may request, by using an ARQ mechanism, the transmit end to retransmit the data packet. Specifically, the receive end may check, by using a cyclic redundancy check (Cyclic Redundancy Check, CRC) check, whether the received data packet is incorrect. If the data packet is correct, the receive end returns an ACK of the data packet to the transmit end; or if the data packet is incorrect, the receive end sends a NACK of the data packet to the transmit end, and, the receive end retransmits the data packet to the receive end after receiving the NACK of the data packet.
   Using downlink data transmission as an example, UE (that is, a receive end) receives a TB sent by a base station (that is, a transmit end) through a PDSCH. If the UE correctly receives the TB, a status of HARQ-ACK feedback performed by the UE on an uplink is an ACK (that is, the UE feeds back an ACK of the TB to the base station). If the UE does not correctly receive the TB, a status of HARQ-ACK feedback performed by the UE on an uplink is a NACK (that is, the UE feeds back a NACK of the TB to the base station). If the base station receives the NACK fed back by the UE, the TB is retransmitted to the base station, so that the UE can perform HARQ combination on the retransmitted TB and the TB that is not correctly received.
   It should be noted that in the LTE system, the ACK feedback, NACK feedback, and HARQ retransmission are all performed by using a TB as a unit.
(3) Coding block (Coding Block, CB): To improve coding and decoding efficiency and reduce coding and decoding complexity, the TB may be divided into a plurality of CBs for channel coding and decoding. For example, a quantity of bits of a maximum CB of Turbo code is 6144. If a quantity of bits of one TB is greater than 6144, the TB may be divided into a plurality of CBs for separate encoding and decoding. For another example, a quantity of bits of a maximum CB of low density parity check code (Low Density Parity Check Code, LDPC) is about 2000. It is assumed that the quantity of bits of the maximum CB of low density parity check code is 2000. If a quantity of bits of one TB is greater than 2000, the TB may be divided into a plurality of CBs for separate encoding and decoding.
   Generally, each CB has an independent check function. Using the Turbo code as an example, a CB CRC is added to each CB before encoding, so that the UE may determine, through a CRC check, whether the CB is correctly decoded. For the LDPC, a CB CRC is added to each CB before encoding, or an encoding matrix of the LPDC has a check function. That is, each CB of the LDPC may also have a check function.
   Therefore, it can be learned that regardless of whether the PDSCH sent by the base station carries the TB or the CB obtained by dividing the TB, the UE can determine, through a check, whether the TB or the CB is correctly transmitted.
(4) Resource element (Resource Element, RE): Downlink data transmission in an LTE system is based on orthogonal frequency division multiplexing access (Orthogonal Frequency Division Multiplexing Access, OFDMA), and uplink data transmission is based on single-carrier frequency-division multiple access (Single-carrier Frequency-Division Multiple Access, SC-FDMA). Therefore, in a data transmission process in the LTE system, a time-frequency resource is divided into an OFDMA symbol or an SC-FDMA symbol (referred to as a time domain symbol below, a symbol for short) in a dimension of time domain and a subcarrier in a dimension of frequency domain. A minimum resource granularity is one RE. To be specific, one RE represents a time-frequency grid including one time domain symbol in time domain and one subcarrier in frequency domain.
(5) Channel state information (Channel State Information, CSI): The CSI includes channel quality information (Channel Quality Information, CQI), a precoding matrix indication (Precoding Matrix Indication, PMI), and a rank indication (Rank Indication, RI).

For example, the foregoing first device is a terminal device (for example, UE), and the foregoing second device is a network device (for example, a base station). Generally, the base station may feed back uplink channel information to the UE by using a physical downlink control channel (Physical Downlink Control Channel, PDCCH). However, with increasing expansion of communications services, CSI of a channel (for example, an uplink channel) is increasingly accurate, and a volume of uplink channel information that needs to be fed back by the base station to the UE is also increasing. In other words, load that a PDCCH needs to carry is relatively large, and a problem that the PDCCH cannot carry the uplink channel information may exist.

Currently, although there is no solution for the base station to feed back the uplink CI to the UE, in a feasible solution, the UE may indicate the UCI to the base station by using a physical uplink shared channel (Physical Uplink Shared Channel, PUSCH) carrying the UCI. However, a disadvantage of this solution is that there is no error feedback capability for the UCI carried on the PUSCH, that is, after receiving the UCI, the base station cannot feed back an error in the UCI to the UE even if the base station finds the error. In this case, by using a solution of transmitting the UCI, when the base station indicates the uplink channel information to the UE, there may be a problem that the UE cannot feed back an error to the base station if the uplink channel information is transmitted incorrectly, so that a success rate of indicating the uplink channel information by the base station to the UE is relatively low.

To improve the success rate of indicating the uplink channel information by the base station to the UE, in the embodiments of this application, the foregoing solution of "indicating, by the UE, the UCI to the base station by using the PUSCH" may be combined with an error feedback mechanism (for example, an HARQ mechanism of a PDSCH), to provide a solution in which the base station indicates the uplink CI to the UE by using the PDSCH (that is, an information transmission method provided in the embodiments of this application). In this solution, the UE may use the solution of "indicating, by the UE, the UCI to the base station by using the PUSCH", and feed back receiving status information based on the foregoing error feedback mechanism.

To better understand the information transmission method provided in the embodiments of this application, the foregoing solution "indicating, by the UE, the UCI to the base station by using the PUSCH" is described herein in the embodiments of this application.

An uplink grant (UL Grant) of the base station includes a 1-bit information field, used by the UE to feed back the CSI. If the UE needs to send uplink data on a subframe of the PUSCH (that is, the subframe has a UL grant) and needs to send DCI at the same time, where the DCI includes an ACK/NACK (that is, an HARQ-ACK), CQI, a PMI, and an RI, the UE may multiplex the DCI and the uplink data together, and transmit the DCI and the uplink data to the base station on the subframe of the PUSCH.

The DCI and the uplink data may be multiplexed together by rate matching and puncturing. Specifically, the "uplink data (UL-SCH)", " CQI, PMI", and " RI" are multiplexed together by rate matching, and the HARQ-ACK is combined with the foregoing three types of information (the uplink data, the CQI/PMI, and the PI) by puncturing.

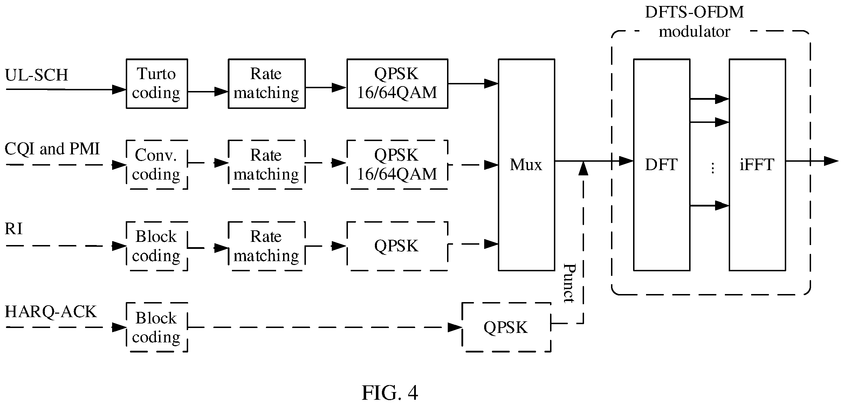

Specifically, as shown in FIG. 4, the UE may separately encode "the UL-SCH", " CQI, PMI", " RI", and " HARQ-ACK". For example, the UL-SCH is encoded by using Turto coding (coding), the CQI and the PMI are encoded by using conv. coding (Conv. coding), and the RI and the HARQ-ACK are encoded by using block coding (Block coding). Subsequently, the UE may perform rate matching (Rate Matching) and modulation on the encoded "UL-SCH", "CQI, PMI", and "RI", and then multiplex the "UL-SCH", " CQI, PMI", and " RI" together by using Mux. For example, a modulation scheme of the UL-SCH is quadrature phase shift keying (Quadrature Phase Shift Keying, QPSK) or 16/64 quadrature amplitude modulation (Quadrature Amplitude Modulation, QAM), a modulation scheme of the CQI and the PMI is QPSK or 6/64QAM, and a modulation scheme of the RI is QPSK. Then, the UE may combine, by puncturing (Punct), the encoded HARQ-ACK with the " UL-SCH", " CQI, PMI", and " RI" that are obtained after the Mux. Finally, a discrete Fourier transform spectroscopy (Discrete Fourier Transform Spectroscopy, DFTS)-orthogonal frequency division multiplexing (Orthogonal Frequency Division Multiplexing, OFDM) modulator (modulator) performs Fourier transform on the data obtained through combination.

Based on an example shown in FIG. 4 in which the UE performs rate matching on the " UL-SCH", " CQI, PMI", and " RI" and performs puncturing on the HARQ-ACK, a difference between rate matching and puncturing is described herein in the embodiments of this application.

Rate matching means that a code rate used for encoding each of the " UL-SCH", " CQI, PMI", and " RI" is determined systematically. After encoding and modulation are performed on the three types of information according to respective code rate, all uplink resources (that is, REs) can be used up exactly. For example, in one transmission, the UL-SCH includes 100 bits and uses QPSK coding (one symbol carries information of 2 bits), and there are a total of 100 REs as uplink resources. In this case, a code rate of 100/2/100=1/2 should be used for the UL-SCH. If the UE finds that the SCH requires 10 additional REs to carry the CQI, the UE adjusts, by rate matching, the code rate of the UL-SCH to a code rate of 100/2/(100-10)=0.56, so that the SCH and the CQI can be carried on the 100 REs at the same time.

An advantage of rate matching is that when some transmission resources need to be used for another purpose, original data transmission performance can still be ensured. A disadvantage of rate matching is that rate matching requires strict symmetry of information between a transmit end and a receive end. Based on the foregoing example, if the base station does not know that 10 REs in the PUSCH carry the CQI and still considers that all the 100 REs are UL-SCHs, the base station cannot correctly demodulate the uplink data.

In addition, the base station may ensure, by scheduling, data reliability after rate matching. That is, because the base station knows in advance that an actual code rate of uplink transmission of the UE may increase due to rate matching, the base station can configure a relatively low code rate for the UE during scheduling, so that the code rate is still within a range in which correct transmission can be performed even if the code rate is increased due to rate matching.

Contrary to rate matching, puncturing directly ignores the UL-SCH, the CQI/PMI, and the RI information that should have been carried on some REs before, and directly carries the HARQ-ACK. In other words, information such as the original UL-SCH is directly discarded. It can be learned that puncturing damages transmission performance of the punctured information. On the contrary, an advantage is that if a quantity of punctured REs is not great, the base station can correctly demodulate the data in the PUSCH regardless of whether the UE has punctured the REs.

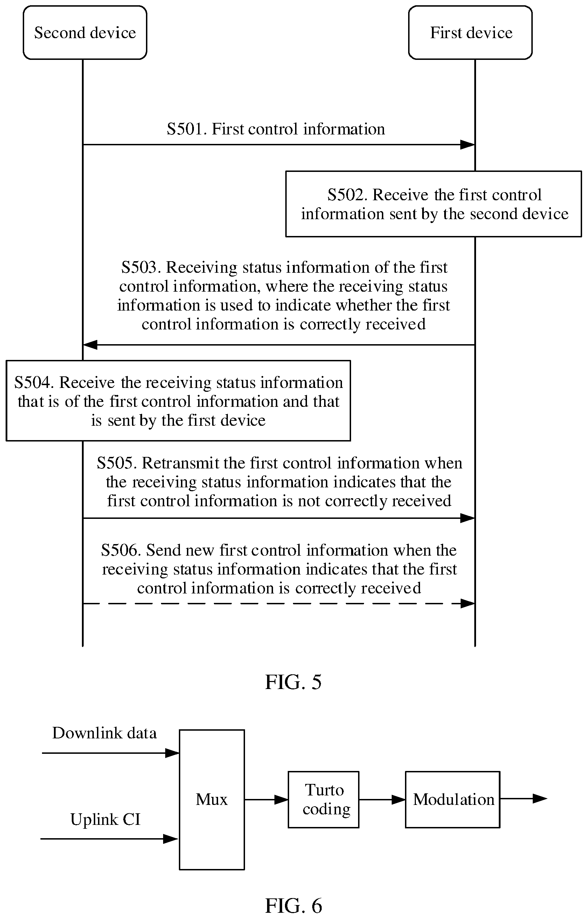

An embodiment of this application provides an information transmission method. As shown in FIG. 5, the information transmission method includes S501 to S506.

S501. A second device sends first control information to a first device.

In a first application scenario of this embodiment of this application, the second device is a network device (for example, a base station), the first device is a terminal device (for example, UE), the first control information is downlink control information, and the first control information includes uplink CI.

In a second application scenario of this embodiment of this application, the second device is a terminal device, the first device is a network device, and the first control information is uplink control information.

Regardless of the first application scenario or the second application scenario, the first control information may be scheduled by using DCI. In the first application scenario, the first control information is carried on a downlink data channel (for example, a PDSCH). In the second application scenario, the first control information is carried on an uplink data channel (for example, a PUSCH).

S502. The first device receives the first control information sent by the second device.

In the first application scenario, the terminal device (that is, the first device) may receive the first control information that is carried on the PDSCH and that is sent by the network device (that is, the second device).

In the second application scenario, the network device (that is, the first device) may receive the first control information that is carried on the PUSCH and that is sent by the terminal device (that is, the second device).

S503. The first device sends receiving status information of the first control information to the second device, where the receiving status information is used to indicate whether the first control information is correctly received.

In the first application scenario, the receiving status information sent by the terminal device (that is, the first device) to the network device (that is, the second device) may be HARQ information, where the HARQ information is an ACK or a NACK. When the HARQ information is the ACK, it indicates that the first control information (the uplink CI) is correctly received. When the HARQ information is the NACK, it indicates that the first control information (the uplink CI) is not correctly received.

In a design method of the second application scenario, the sending, by the network device (that is, the first device), the receiving status information to the terminal device (that is, the second device) is implemented by scheduling the terminal device. Specifically, when the network device correctly receives the first control information, the network device may schedule the terminal device to send other data. For example, the network device may send scheduling information of the other data to the terminal device, to schedule the terminal device to send the other data. When the network device does not correctly receive the first control information, the network device may schedule the terminal device to continue sending the first control information. For example, the network device may retransmit scheduling information of the first control information to the terminal device, to schedule the terminal device to retransmit the first control information.

In another design method of the second application scenario, the sending, by the network device (that is, the first device), the receiving status information of the first control information to the terminal device (that is, the second device) may be implemented by scheduling the terminal device by using a physical hybrid automatic repeat request indicator channel (Physical Hybrid ARQ Indicator Channel, PHICH). Specifically, data transmitted by a MAC layer of the second device to a physical layer of the second device is transmitted by using a transport block (Transport Block, TB) as a unit, and the PHICH may be used to respond to data transmitted on the PUSCH with HARQ information (such as an ACK or a NACK). Each uplink TB may correspond to one field in the PHICH.

S504. The second device receives the receiving status information that is of the first control information and that is sent by the first device.

After receiving the receiving status information that is of the first control information and that is sent by the first device, the second device may determine whether the first control information is correctly received.

S505. When the receiving status information indicates that the first control information is not correctly received, the second device retransmits the first control information to the first device.

S506. When the receiving status information indicates that the first control information is correctly received, the second device sends new first control information to the first device.

It should be noted that the "new first control information" in S506 is different from the first control information in S501 to S505.

According to the information transmission method provided in this embodiment of this application, after the second device sends the first control information to the first device, the first device may return the receiving status information of the first control information to the second device, to indicate whether the first device correctly receives the first control information. In this way, the second device may not only send the first control information to the first device, but also determine, based on corresponding feedback information (that is, the receiving status information) received regardless of whether the first control information is correctly received, whether to retransmit the first control information, thereby improving a success rate of correctly receiving the first control information by the first device.

In the first application scenario of this embodiment of this application, the information transmission method provided in this embodiment of this application is described by using an example in which the second device is a network device (for example, a base station), the first device is a terminal device (for example, UE), the first control information is uplink CI, and the information transmission method is applied to a process of feeding back the uplink CI by the network device to the terminal device.

In implementation (1) and implementation (2) of the first application scenario, the network device may transmit the uplink CI to the terminal device by using a TB including the uplink CI, where the TB further includes downlink data. As shown in FIG. 6, the network device may bind the downlink data and the uplink CI together, perform coding (for example, Turbo coding) and modulation, and then transmit the downlink data and the uplink CI to the terminal device.

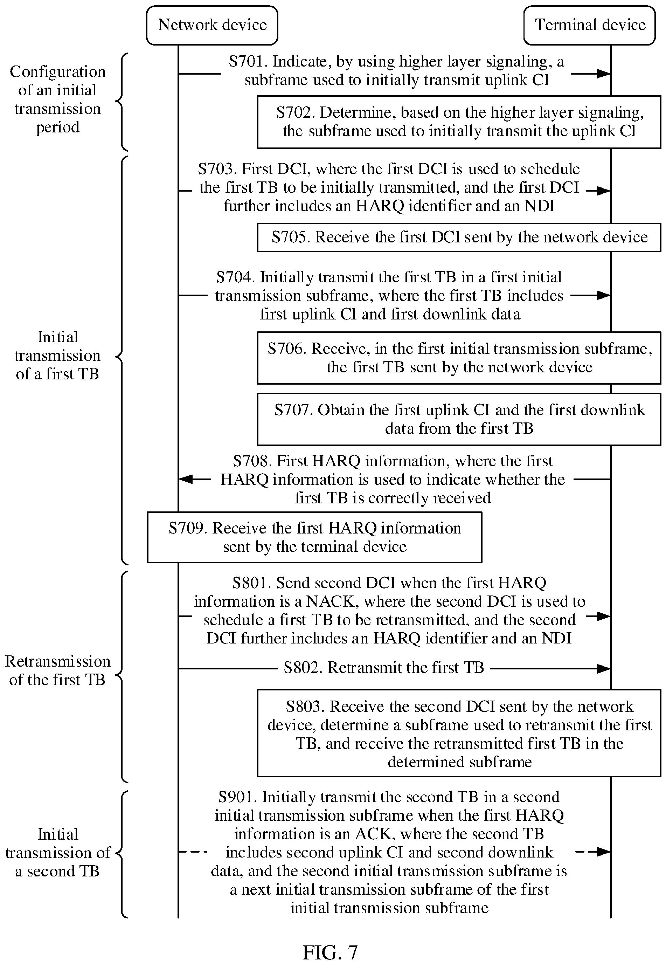

In implementation (1) of the first application scenario, the network device may periodically transmit new TBs to the terminal device, and retransmit a TB based on HARQ information fed back by the terminal device. Specifically, as shown in FIG. 7, an information transmission method provided in an embodiment of this application includes S701 to S709.

S701. The network device indicates, to the terminal device by using higher layer signaling, a subframe used to initially transmit the uplink CI.

In this embodiment of this application, the "subframe used to initially transmit the uplink CI" refer to a subframe carrying the uplink CI that is initially transmitted (that is, transmitted for the first time). The network device may indicate a subframe offset T and a transmission period P to the terminal device by using the higher layer signaling, and indicate that a subframe that meets (K * NF + Index - T)mod(P) = 0 is the subframe used to initially transmit the uplink CI, that is, the uplink CI is transmitted in the subframe that meets (K ∗ NF + Index - T)mod(P) = 0. mod is a modulo operation symbol, NF is a number of a radio frame in which the subframe is located, K is a quantity of subframes included in one radio frame (for example, K=10), and Index is an index number of the subframe. In this embodiment of this application, mod may be replaced with % to represent a modulo operation symbol.

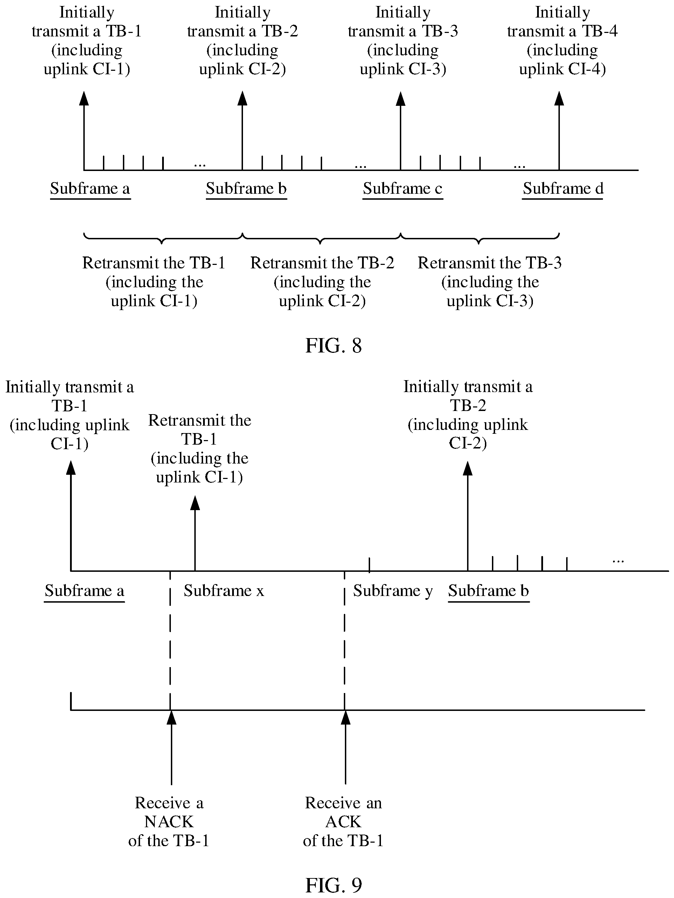

For example, it is assumed that K=10, and a subframe a, a subframe b, a subframe c, and a subframe d shown in FIG. 8 are subframes that meet (10 ∗ NF + Index - T)mod(P) = 0. In this embodiment of this application, the subframe a is used as an example. The subframe a meets (10 ∗ NF + Index - T)mod(P) = 0, where specifically, a number NF - a of a radio frame in which the subframe a is located and an index number Index - a of the subframe a meet (10 ∗ (NF - a) + (Index - a) - T)mod(P) = 0.

In this case, the network device may transmit different uplink CI separately in the subframe a, the subframe b, the subframe c, and the subframe d. For example, as shown in FIG. 8, the network device may initially transmit a TB-1 including uplink CI-1 to the terminal device in the subframe a, initially transmit a TB-2 including uplink CI-2 to the terminal device in the subframe b, initially transmit a TB-3 including uplink CI-3 to the terminal device in the subframe c, and initially transmit a TB-4 including uplink CI-4 to the terminal device in the subframe d.

It should be noted that uplink CI initially transmitted in each subframe is different. For example, the uplink CI-1 initially transmitted in the subframe a, the uplink CI-2 initially transmitted in the subframe b, the uplink CI-3 initially transmitted in the subframe c, and the uplink CI-4 initially transmitted in the subframe d are different. In addition, downlink data included in TBs initially transmitted in each subframe is also different. For example, downlink data 1 included in the TB-1, downlink data 2 included in the TB-2, downlink data 3 included in the TB-3, and downlink data 4 included in the TB-4 are different from each other. In addition, numbers of radio frames in which the subframe a, the subframe b, the subframe c, and the subframe d are located may be the same or may be different. This is not limited in this embodiment of this application.

S702. The terminal device determines, based on the higher layer signaling, the subframe used to initially transmit the uplink CI.

The terminal device may receive the higher layer signaling sent by the network device, and determine, based on the subframe offset T and the transmission period P that are indicated by the higher layer signaling, and a condition (K ∗ NF + Index - T)mod(P) = 0 that an initial transmission subframe of the uplink CI meets, that a subframe that meets the condition (K ∗ NF + Index - T)mod(P) = 0 is the subframe used to initially transmit the uplink CI.

It should be noted that the terminal device may determine, based on an indication of the higher layer signaling, a plurality of subframes carrying the uplink CI. For example, as shown in FIG. 8, the terminal device may determine, based on the indication of the higher layer signaling, that the subframe a, the subframe b, the subframe c, the subframe d, and the like are subframes used to initially transmit the uplink CI.

It may be understood that because reliability of the higher layer signaling is far higher than that of physical layer signaling, the network device indicates, to the terminal device by using the higher layer signaling, the subframe used to initially transmit the uplink CI, thereby improving a success rate of indicating, by the network device to the terminal device, the subframe used to initially transmit the uplink CI.

Optionally, in this embodiment of this application, the subframe used to initially transmit the uplink CI may alternatively be predefined in the network device and the terminal device, and the network device does not need to indicate, to the terminal device, the subframe used to initially transmit the uplink CI. In other words, S701 and S702 are optional. The network device may initially transmit the TB including the uplink CI to the terminal device in a predefined subframe used to initially transmit the uplink CI, and the terminal device may also receive, in the predefined subframe used to initially transmit the uplink CI, the TB that is initially transmitted by the terminal device and that includes the uplink CI.

S703. The network device sends first DCI to the terminal device, where the first DCI is used to schedule a first TB to be initially transmitted, and the first DCI further includes an HARQ identifier and an NDI.

The first DCI is carried on a PDCCH. The HARQ identifier and the NDI in the first DCI can be used to uniquely identify the first TB.

It may be understood that because a quantity of HARQ identifiers is limited, the limited HARQ identifiers are periodically reused in a process of transmitting TBs. Therefore, if two TBs share a same HARQ identifier, it is not represented that the two TBs are a same TB. In addition, if a same HARQ identifier is configured for two different TBs, NDIs of the two TBs both toggle. In this embodiment of this application, that an NDI of a TB does not toggle means that the NDI of the TB does not toggle from 1 to 0, or the NDI of the TB does not toggle from 0 to 1.

It can be learned that the HARQ identifier and the NDI in the first DCI can be used to uniquely identify the first TB. HARQ identifiers of an initially transmitted first TB and a retransmitted first TB are the same. In addition, compared with an NDI of a first TB in previous transmission (an initially transmitted or a retransmitted first TB), an NDI of a first TB in current transmission (a retransmitted first TB) does not toggle.

For example, it is assumed that a first TB includes first downlink data and first uplink CI, and a second TB includes second downlink data and second uplink CI. Because the first downlink data is different from the second downlink data, the first TB is different from the second TB. Therefore, an HARQ identifier of the first TB is different from an HARQ identifier of the second TB; or an HARQ identifier of the first TB is the same as an HARQ identifier of the second TB, but an NDI corresponding to the HARQ identifier toggles between transmission of the first TB and transmission of the second TB. On the contrary, for TBs including same data, for example, HARQ identifiers and NDIs of an initially transmitted first TB and a retransmitted first TB are the same.

S704. The network device initially transmits the first TB to the terminal device in a first initial transmission subframe, where the first TB includes first uplink CI and first downlink data.

The first initial transmission subframe meets the foregoing condition (K ∗ NF + Index - T)mod(P) = 0. The network device may obtain a current uplink CI (that is, the first uplink CI), generate the first TB including the first uplink CI and the first downlink data, determine whether a current subframe meets the foregoing condition (K ∗ NF + Index - T)mod(P) = 0, and, initially transmit the first TB to the terminal device in the current subframe (that is, the first initial transmission subframe) if the current subframe meets the foregoing condition (K ∗ NF + Index - T)mod(P) = 0.

S705. The terminal device receives the first DCI sent by the network device.

The terminal device may receive, on the PDCCH, the first DCI sent by the network device.

The terminal device may read the HARQ identifier and the NDI that are of the first TB and that are included in the first DCI. Therefore, when receiving second DCI used to schedule a first TB to be retransmitted, the terminal device may identify, based on an HARQ identifier and an NDI that are in the second DCI, that the retransmitted first TB and the first TB scheduled by using the first DCI are a same TB.

S706. The terminal device receives, in the first initial transmission subframe, the first TB sent by the network device.

After S702, the terminal device determines a plurality of subframes, including the first initial transmission subframe, that are used to initially transmit uplink CI. Then, the terminal device may demodulate data transmitted on the PDSCH in the first initial transmission subframe, to obtain the first TB.

S707. The terminal device obtains the first uplink CI and the first downlink data from the first TB.

The terminal device may obtain the first uplink CI and the first downlink data from the first TB based on a size of data (for example, uplink CI+downlink data) included in the first TB.

In an implementation of this embodiment of this application, the first DCI further includes a transport block size (Transport Block Size, TBS) of a TB transmitted on the PDSCH, and the TBS is used to indicate a size of data (for example, uplink CI+downlink data) included in the TB transmitted on the PDSCH. In this implementation, the terminal device may obtain the first TB through decoding based on the TBS indicated by the first DCI, then calculate a size of the first downlink data based on the TBS and a size of the first uplink CI (the size of the first downlink data is equal to the TBS minus the size of the first uplink CI), where the size of the first uplink CI is indicated by the network device by using higher layer signaling or physical layer signaling, and finally obtain the first uplink CI and the first downlink data from the first TB based on the size of the first uplink CI and the size of the first downlink data.

Considering discontinuity of the TBS, as shown in Table 1, in an LTE system, only 178 TBS sizes from 16 to 75376 are allowed for a single codeword. That is, a size of a data packet divided from a MAC layer for a physical layer can only be one of the 178 sizes. It is assumed that a data packet delivered from the MAC layer is 3240 bits, and a length of CI is 100 bits. According to the foregoing definition of a TBS, that is, a TBS=a size of downlink data+a size of uplink CI=3340, there is no corresponding value in the corresponding table to indicate the TBS. Therefore, 28 zeros need to be added to the TB, and the TBS is supplemented to 3340+28=3368, to correspond to a value in the table, and then transmission can be performed.

**Table 1**

| | | | | | | | | | |
|---|---|---|---|---|---|---|---|---|---|
| 16 | 296 | 600 | 1096 | 1928 | **3240** | 6200 | 11832 | 22920 | 43816 |
| 24 | 328 | 616 | 1128 | 1992 | **3368** | 6456 | 12216 | 23688 | 45352 |
| 32 | 336 | 632 | 1160 | 2024 | 3496 | 6712 | 12576 | 24496 | 46888 |
| 40 | 344 | 648 | 1192 | 2088 | 3624 | 6968 | 12960 | 25456 | 48936 |
| ... | ... | ... | ... | ... | ... | ... | ... | ... | ... |
| 256 | 552 | 1000 | 1736 | 2856 | 5544 | 10680 | 20616 | 39232 | 75376 |
| 280 | 568 | 1032 | 1800 | 2984 | 5736 | 11064 | 21384 | 40576 | |
| 288 | 584 | 1064 | 1864 | 3112 | 5992 | 11448 | 22152 | 42368 | |

An amount of valid data transmitted by the network device remains unchanged regardless of whether the network device needs to add zeros. However, adding zeros interferes with an original encoding rule and affects encoding performance, or in other words, PDSCH transmission reliability is affected. Based on this, in another implementation of this embodiment of this application, the first DCI further includes a transport block size (Transport Block Size, TBS) transmitted on the PDSCH, and the TBS is used to indicate a size of downlink data included in the TB transmitted on the PDSCH. In this implementation, the network device may indicate a size of uplink CI to the terminal device by using higher layer signaling or physical layer signaling. The terminal device may obtain the size of the data included in the first TB based on a sum of the TBS and the size of the uplink CI indicated by the higher layer signaling or the physical layer signaling, and then obtain the first uplink CI and the first downlink data from the first TB based on the size of the data included in the first TB.

It may be understood that the terminal device may correctly receive the first TB, or may not correctly receive the first TB. Regardless of whether the terminal device correctly receives the first TB, the terminal device feeds back first HARQ information to the network device. The first HARQ information is used to indicate whether the first TB is correctly received. Specifically, after S607, the method in this embodiment of this application may further include S708.

S708. The terminal device sends the first HARQ information to the network device, where the first HARQ information is used to indicate whether the first TB is correctly received.

S709. The network device receives the first HARQ information sent by the terminal device.

When the first TB is not correctly received, the first HARQ information is a NACK, and the network device retransmits the first TB to the terminal device. When the first TB is correctly received, the first HARQ information is an ACK, and the network device may start to transmit new uplink CI.

In this embodiment of this application, "the first TB is correctly received" means that the terminal device correctly receives the first TB from the PDSCH, and "the first TB is not correctly received" means that the terminal device does not correctly receive the first TB. For example, when the first HARQ information is 0, the first HARQ information is an ACK and is used to indicate that the first TB is correctly received; when the first HARQ information is 1, the first HARQ information is a NACK and is used to indicate that the first TB is not correctly received.

In this embodiment of this application, contrary to configuring, by using higher layer signaling, a subframe used to initially transmit the uplink CI, when the initially transmitted first TB is not correctly received, the network device may indicate, by using physical layer signaling, a subframe used to retransmit the first TB. Specifically, the network device may indicate, to the terminal device by using an HARQ ID and an NDI that are included in DCI in physical layer signaling, the subframe used to retransmit the first TB. Specifically, the method in this embodiment of this application may further include S801 to S803.

S801. When the first HARQ information is a NACK, the network device sends second DCI to the terminal device, where the second DCI is used to schedule a first TB to be retransmitted, and the second DCI further includes an HARQ identifier and an NDI.

The first DCI is used to schedule the initially transmitted first TB, the second DCI is used to schedule the first TB to be retransmitted, and data included in the initially transmitted first TB is the same as data included in the first TB to be retransmitted (for example, both the initially transmitted first TB and the first TB to be retransmitted include the first uplink CI and the first downlink data). Therefore, the HARQ identifier included in the second DCI is the same as the HARQ identifier included in the first DCI. For example, as shown in Table 2, both the HARQ identifier included in the second DCI and the HARQ identifier included in the first DCI are Y. In addition, the NDI of the initially transmitted first TB and the NDI of the retransmitted first TB do not toggle. For example, as shown in Table 2, the NDI included in the first DCI is 1, and the NDI included in the second DCI is also 1.

**Table 2**

| DCI information table | | |
|---|---|---|
| | First DCI (scheduling the first TB to be initially transmitted) | Second DCI (scheduling the first TB to be retransmitted) |
| HARQ identifier | Y | Y |
| NDI | 1 | 1 |

S802. The network device retransmits the first TB to the terminal device.

When receiving the NACK of the first TB, the network device may retransmit the first TB in any subframe.

S803. The terminal device receives the second DCI sent by the network device, determines a subframe used to retransmit the first TB, and receives the retransmitted first TB in the determined subframe.

It may be understood that the HARQ identifier included in the second DCI is the same as the HARQ identifier included in the first DCI, and the NDI in the second DCI does not toggle when compared with the NDI in the first DCI. Therefore, the terminal device may determine that the TB scheduled based on the second DCI is the retransmitted first TB. Therefore, the terminal device may determine, based on the second DCI, the subframe used to retransmit the first TB.

In addition, after determining the subframe used to retransmit the first TB, the terminal device may receive the retransmitted first TB in the subframe used to retransmit the first TB, and then combine and demodulate the received retransmitted data (for example, retransmitted first uplink CI and retransmitted first downlink data) and the previous first TB that is not correctly received and that is initially transmitted or retransmitted. In this way, reliability of demodulation of uplink CI and downlink data can be improved.

For example, it is assumed that an initial transmission period of feeding back, by the network device, uplink CI to the terminal device is 40 milliseconds (ms), and one radio frame includes 10 subframes of 1 ms. Therefore, using the initial transmission period of 40 ms is namely using 4 radio frames as an initial transmission period. The network device initially transmits new uplink CI to the terminal device only in an X^{th} subframe in a radio frame at an interval of 4 radio frames. DCI received by the terminal device in an X^{th} subframe of a radio frame further includes an HARQ identifier, and the HARQ identifier indicates that an HARQ ID corresponding to downlink data included in a currently transmitted TB is Y. A user learns, by using the HARQ identifier, that in current transmission, uplink CI is bound to the downlink data whose HARQ identifier is Y, that is, the uplink CI is always bound to the downlink data whose HARQ identifier is Y for transmission, until both are correctly received.

S901. When the first HARQ information is an ACK, the network device initially transmits a second TB to the terminal device in a second initial transmission subframe, where the second TB includes second uplink CI and second downlink data, and the second initial transmission subframe is a next initial transmission subframe of the first initial transmission subframe.

In this embodiment of this application, the second uplink CI is different from the first uplink CI, and the second downlink data is also different from the first downlink data.

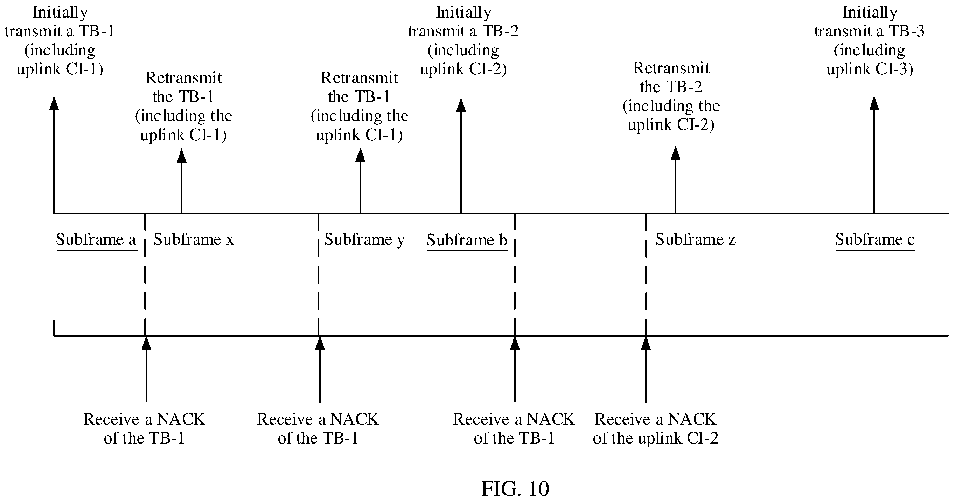

It should be noted that in this embodiment of this application, after initially transmitting the first TB in an initial transmission subframe (the first initial transmission subframe), if the network device receives, before a next initial transmission subframe (for example, the second initial transmission subframe) arrives, HARQ information that is a NACK, the network device may retransmit the first TB. In other words, if the terminal device receives a NACK of the first TB between the first initial transmission subframe and the second initial transmission subframe, the terminal device may retransmit the first TB. For example, as shown in FIG. 8, the network device may retransmit the TB-1 between the subframe a and the subframe b, retransmit the TB-2 between the subframe b and the subframe c, and retransmit the TB-3 between the subframe c and the subframe d. As shown in FIG. 9, if a NACK of the TB-1 is received between the subframe a and the subframe b, the network device may retransmit the TB-1 in a subframe x. As shown in FIG. 10, if NACKs of the TB-1 are received between the subframe a and the subframe b, the network device may retransmit the TB-1 in a subframe x, and retransmit the TB-1 in a subframe y. If the terminal device receives an ACK of the first TB between the first initial transmission subframe and the second initial transmission subframe, the terminal device may initially transmit the second TB in the second initial transmission subframe. For example, as shown in FIG. 9, if an ACK of the TB-1 is received between the subframe a and the subframe b, the network device may initially transmit the TB-2 in the subframe b.

However, uplink CI may change at any time, and a change of the uplink CI may exceed a threshold between the first initial transmission subframe and the second initial transmission subframe. If the terminal device still does not correctly receive the first TB in the second initial transmission subframe, the network device may stop retransmitting the first TB, but transmit the second TB including the second uplink CI (that is, new uplink CI). For example, as shown in FIG. 10, if the network device receives, between the subframe b and the subframe c, a NACK that is of the TB-1 and that is sent by the terminal device, the network device may not retransmit the TB-1. However, if the network device receives, between the subframe b and the subframe c, a NACK that is of the TB-2 and that is sent by the terminal device, the network device may retransmit the TB-2 in a subframe z.

After S901, the terminal device may feed back second HARQ information to the network device, where the second HARQ information is used to indicate whether the second TB is correctly received. In this embodiment of this application, a method for transmitting the second TB by the network device to the terminal device is similar to the method for transmitting the first TB by the network device to the terminal device, and a method for feeding back the second HARQ information by the terminal device to the network device is similar to the method for transmitting the second HARQ information by the terminal device to the network device. Details are not described herein again in this embodiment of this application.

According to the information transmission method provided in this embodiment of this application, the network device may transmit uplink CI to the terminal device by using a TB that includes the uplink CI and that is transmitted on a PDSCH; and the terminal device may feed back, to the network device based on an HARQ mechanism of the PDSCH, HARQ information used to indicate whether the TB (including the uplink CI carried in the TB) is correctly received. In this way, when the HARQ information is a NACK, the network device may retransmit the TB that carries the uplink CI, so that a success rate of indicating the uplink CI by the network device to the terminal device can be improved.

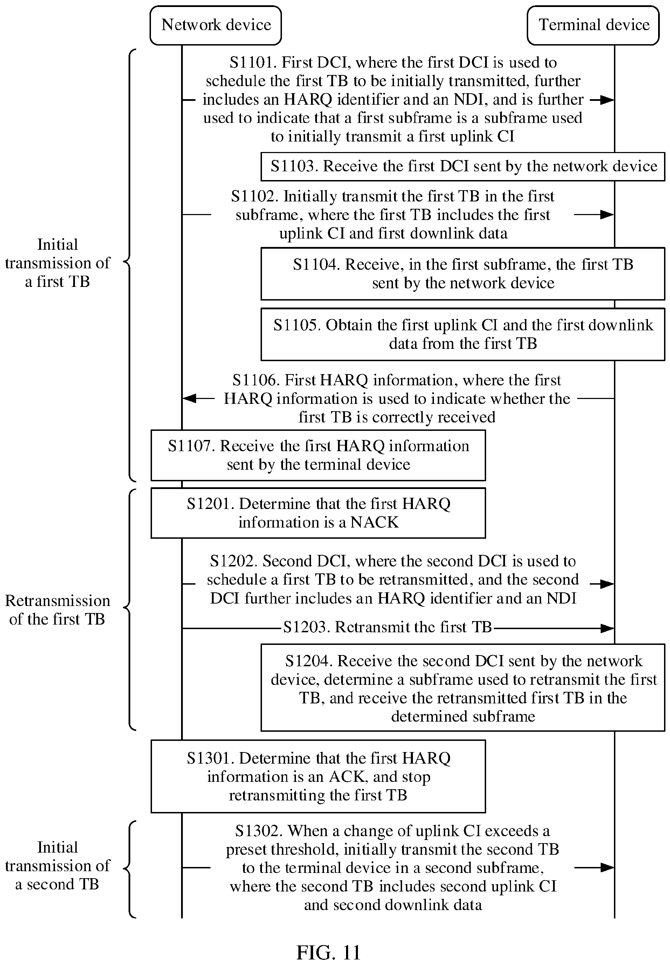

A difference from implementation (1) of the first application scenario is that in implementation (2) of the first application scenario, the network device aperiodically sends (initially transmits and retransmits) uplink CI to the terminal device. Specifically, as shown in FIG. 11, an information transmission method provided in an embodiment of this application includes S1101 to S1105.

S1101. A network device sends first DCI to a terminal device, where the first DCI is used to schedule a first TB to be initially transmitted, the first DCI further includes an HARQ identifier and an NDI, and the first DCI is further used to indicate that a first subframe is a subframe used to initially transmit a first uplink CI.

The first TB carries the first uplink CI and first downlink data. The first DCI is carried on a PDCCH. The HARQ identifier and the NDI in the first DCI can be used to uniquely identify the first TB. For detailed descriptions of the HARQ identifier and the NDI herein, refer to related descriptions of the HARQ identifier and the NDI in S703 in the embodiment of this application. Details are not described herein again in this embodiment of this application.

In this embodiment of this application, the network device may add a special bit to the first DCI to indicate whether the first subframe used to transmit the first TB is a subframe used to initially transmit uplink CI. For example, when the special bit is 1, it indicates that the corresponding subframe is the subframe used to initially transmit the uplink CI; when the special bit is 0, it indicates that the corresponding subframe is not the subframe used to initially transmit the uplink CI.

S1102. The network device initially transmits the first TB to the terminal device in the first subframe, where the first TB includes the first uplink CI and the first downlink data.

In this embodiment of this application, the network device may immediately initially transmit current uplink CI to the terminal device when a change of the uplink CI exceeds a preset threshold. For example, when determining that the change of the uplink CI exceeds the preset threshold, the network device may perform S1101 of sending, to the terminal device, the first DCI used to schedule the current uplink CI (that is, the first uplink CI), then bind the first uplink CI and the first downlink data (that is, to-be-transmitted downlink data) together, and transmit the first TB including the first uplink CI and the first downlink data to the terminal device.

S 1103. The terminal device receives the first DCI sent by the network device.

The terminal device may determine, based on an indication of the first DCI, that the first subframe is the subframe used to initially transmit the first uplink CI, and then perform S 1104 of receiving, in the first subframe, the first TB sent by the network device. In addition, the terminal device may further determine, based on the HARQ identifier included in the first DCI, a block number of the first downlink data carried in the first TB.

S 1104. The terminal device receives, in the first subframe, the first TB sent by the network device.

The terminal device may receive, in the first subframe indicated by the first DCI based on scheduling of the first DCI, the first TB sent by the network device.

S 1105. The terminal device obtains the first uplink CI and the first downlink data from the first TB.

The first DCI may further include a TBS of a TB transmitted on the PDSCH. The terminal device may obtain the first uplink CI and the first downlink data from the first TB based on the TBS indicated by the first DCI.

It should be noted that for the TBS and the method for obtaining, by the terminal device, the first uplink CI and the first downlink data from the first TB based on the TBS in this embodiment of this application, refer to related descriptions in the foregoing implementation (1). Details are not described again in this embodiment of this application.

It may be understood that the terminal device may correctly receive the first TB, or may not correctly receive the first TB. Regardless of whether the terminal device correctly receives the first TB, the terminal device feeds back first HARQ information to the network device. The first HARQ information is used to indicate whether the first TB is correctly received. Specifically, after S 1105, the method in this embodiment of this application may further include S1106.

S1106. The terminal device sends the first HARQ information to the network device, where the first HARQ information is used to indicate whether the first TB is correctly received.

S 1107. The network device receives the first HARQ information sent by the terminal device.

When the first TB is not correctly received, the first HARQ information is a NACK, and the network device retransmits the first TB to the terminal device. When the first TB is correctly received, the first HARQ information is an ACK, and the network device may start to transmit new uplink CI.

It should be noted that a difference from the foregoing implementation (1) is that in implementation (2), both the subframe used to initially transmit the uplink CI and a subframe used to retransmit the uplink CI are indicated by the network device by using physical layer signaling. Specifically, the network device may add a special bit to the first DCI to indicate whether the first subframe used to transmit the first TB is the subframe used to initially transmit the uplink CI, and the network device may indicate, to the terminal device by using an HARQ ID and an NDI that are included in DCI in physical layer signaling, a subframe used to retransmit the first TB. Specifically, the method in this embodiment of this application may further include S1201 to S1204.

S 1201. The network device determines that the first HARQ information is a NACK.

S 1202. The network device sends second DCI to the terminal device, where the second DCI is used to schedule a first TB to be retransmitted, and the second DCI further includes an HARQ identifier and an NDI.

S1203. The network device retransmits the first TB to the terminal device.

S1204. The terminal device receives the second DCI sent by the network device, determines the subframe used to retransmit the first TB, and receives the retransmitted first TB in the determined subframe.

For specific descriptions of S1201 to S1204 in this embodiment of this application, refer to the detailed descriptions of S801 to S803 in implementation (1). Details are not described again in this embodiment of this application.

S 1301. The network device determines that the first HARQ information is an ACK, and the network device stops retransmitting the first TB.

S1302. When a change of uplink CI exceeds a preset threshold, the network device initially transmits a second TB to the terminal device in a second subframe, where the second TB includes second uplink CI and second downlink data.

The second subframe is a subframe that may be used to transmit downlink data when the network device determines that the change of uplink CI exceeds the preset threshold. The second uplink CI is uplink CI obtained by the network device when the change of uplink CI exceeds the preset threshold. In this embodiment of this application, the second uplink CI is different from the first uplink CI, and the second downlink data is also different from the first downlink data.

In this embodiment of this application, regardless of whether the network device receives the ACK of the first uplink CI, when the change of uplink CI exceeds the preset threshold, the network device initially transmits the second TB to the terminal device.

It should be noted that a sequence of performing S1301 and S1302 is not limited in this embodiment of this application. S1301 may be performed before S1302, or S1302 may be performed before S1301. This is not limited in this embodiment of this application. In addition, a sequence of performing S1302 and S1103 to S1107 is not limited in this embodiment of this application. S1103 to S1107 may be performed before S1302, or S1302 may be performed before S1103 and S1107. This is not limited in this embodiment of this application.

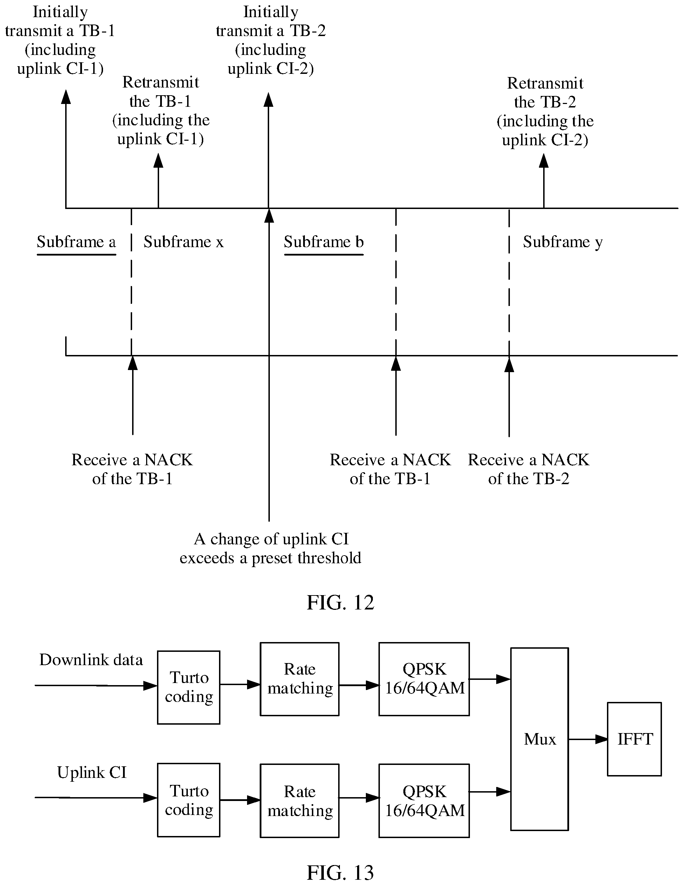

It should be noted that if the first HARQ information that the network device receives before initially transmitting the second TB is a NACK (that is, it indicates that at least one of the first uplink CI and the first downlink data is not correctly received), the network device may retransmit the first TB. For example, as shown in FIG. 12, after initially transmitting a TB-1 in a subframe a and before initially transmitting a TB-2 in a subframe b, if the network device receives a NACK of the TB-1, the network device may retransmit the TB-1. For example, the network device retransmits the TB-1 in a subframe x.

According to the information transmission method provided in this embodiment of this application, the network device may transmit uplink CI to the terminal device by using a TB that includes the uplink CI and that is transmitted on a PDSCH; and the terminal device may feed back, to the network device based on an HARQ mechanism of the PDSCH, HARQ information used to indicate whether the TB (including the uplink CI carried in the TB) is correctly received. In this way, when the HARQ information is a NACK, the network device may retransmit the TB that carries the uplink CI, so that a success rate of indicating the uplink CI by the network device to the terminal device can be improved.

In implementation (3) and implementation (4) of the first application scenario, for the network device, the uplink CI may be carried on a physical downlink shared channel PDSCH, and the PDSCH further includes a TB. Different from implementation (1) and implementation (2) of the first application scenario, the uplink CI is not carried in any TB.

As shown in FIG. 13, the network device may separately encode (for example, Turbo coding) downlink data and uplink CI, perform rate matching (Rate Matching) and modulation on the downlink data and the uplink CI, and then mix (Mux) the modulated downlink data and the modulated uplink CI for sending. In this embodiment of this application, for a specific manner in which the network device performs rate matching on the downlink data and the uplink CI, refer to specific descriptions of the rate matching manner shown in FIG. 4 in the embodiments of this application. Details are not described again in this embodiment of this application.

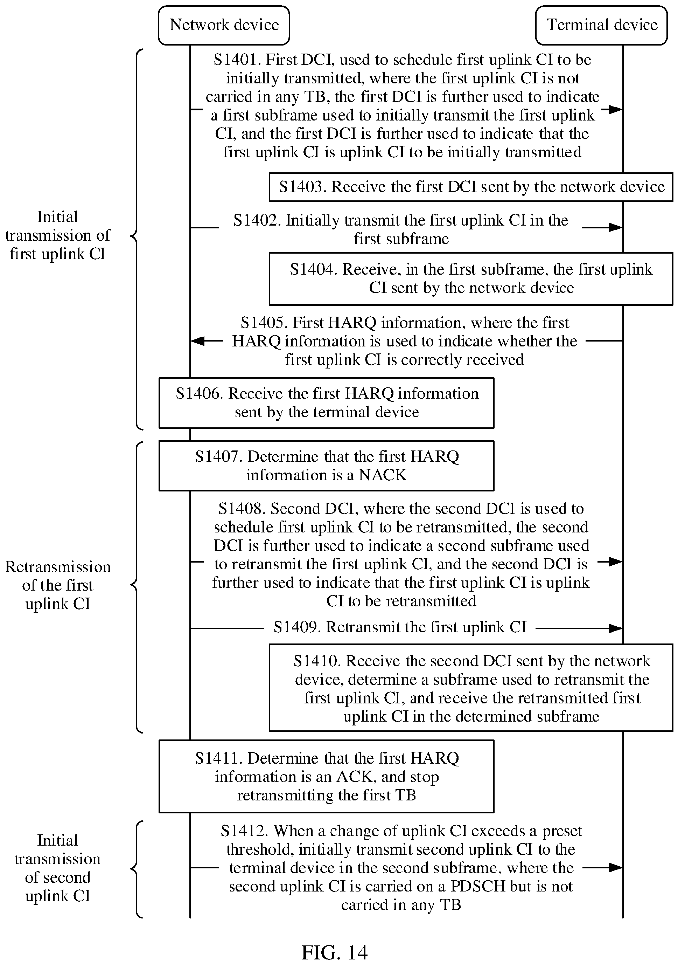

In implementation (3) of the first application scenario, the network device aperiodically transmits (initially transmits and retransmits) uplink CI to the terminal device. Specifically, as shown in FIG. 14, an information transmission method provided in an embodiment of this application includes S1401 to S1406.

S1401. A network device sends first DCI to a terminal device, where the first DCI is used to schedule first uplink CI to be initially transmitted, the first uplink CI is not carried in any TB, the first DCI is further used to indicate a first subframe used to transmit the first uplink CI, the first DCI is further used to indicate that the first uplink CI is uplink CI to be initially transmitted.

In the first application scenario in this embodiment of this application, compared with implementation (1), in implementation (3), information of two additional bits needs to be carried in physical layer signaling (that is, DCI), where one bit is used to indicate a subframe used to transmit uplink CI, and the other bit is used to indicate that the uplink CI is uplink CI to be initially transmitted or uplink CI to be retransmitted. Compared with implementation (2), information of one additional bit needs to be carried in the physical layer signaling (that is, the DCI), and the bit is used to indicate the subframe used to transmit the uplink CI.

S 1402. The network device initially transmits the first uplink CI to the terminal device in the first subframe.

S 1403. The terminal device receives the first DCI sent by the network device.

The terminal device may determine, based on an indication of the first DCI, that the first subframe is a subframe used to initially transmit the first uplink CI, and then perform S1404 of receiving, in the first subframe, the first uplink CI sent by the network device. In addition, the terminal device may further determine, based on the indication of the first DCI, that the first uplink CI transmitted in the first subframe is initially transmitted uplink CI.

S 1404. The terminal device receives, in the first subframe, the first uplink CI sent by the network device.

The terminal device may receive, in the first subframe indicated by the first DCI based on scheduling of the first DCI, the first uplink CI sent by the network device.

It may be understood that the terminal device may correctly receive the first uplink CI, or may not correctly receive the first uplink CI. Regardless of whether the terminal device correctly receives the first uplink CI, the terminal device feeds back first HARQ information to the network device. The first HARQ information is used to indicate whether the first uplink CI is correctly received. Specifically, after S 1404, the method in this embodiment of this application may further include S 1405.

S1405. The terminal device sends the first HARQ information to the network device, where the first HARQ information is used to indicate whether the first uplink CI is correctly received.

Optionally, the terminal device may feed back HARQ information of uplink CI carried on a PDSCH to the network device, by using a preset dedicated PUCCH resource used to transmit HARQ information of uplink CI. It may be understood that because the network device sends uplink CI to the terminal device with a relatively low frequency, to reduce PUCCH resources occupied by the HARQ information of the uplink CI, a plurality of terminal devices may reuse one preset PUCCH resource.

It should be noted that the solution that the terminal device feeds back the HARQ information of the uplink CI to the network device on the dedicated PUCCH resource is used only when data is transmitted by using a single codeword. An existing PUCCH format 1a supports 1-bit HARQ information feedback, and an existing PUCCH format 1b supports 2-bit HARQ information feedback. The PUCCH format 1a and the PUCCH format 1b respectively correspond to a scenario of 1-codeword transmission and a scenario of 2-codeword transmission. When the network device schedules single-codeword transmission, the terminal device may transmit the HARQ information of the uplink CI by using a remaining bit in the PUCCH format 1b. In addition, even if the network device schedules 2-codeword transmission for the terminal device, the terminal device may use an HARQ bundling (also referred to as HARQ-ACK bundling or ACK/NACK bundling) technology to combine two pieces of HARQ information into one piece for feedback. The HARQ bundling technology is used to resolve a problem of limited uplink coverage. In other words, because the terminal device does not have a capability of feeding back 2-bit information, only 1-bit information may be fed back by using the HARQ bundling technology. In this case, the HARQ information of the uplink CI can only participate in bundling, and cannot exist in a form of a single bit.

Optionally, the terminal device may further perform bundling on the HARQ information of the uplink CI and HARQ information of a TB transmitted on the PDSCH.

S 1406. The network device receives the first HARQ information sent by the terminal device.

S 1407. The network device determines that the first HARQ information is a NACK.

When determining that the first HARQ information is a NACK, the network device may perform S1408 to S1410.

S 1408. The network device sends second DCI to the terminal device, where the second DCI is used to schedule first uplink CI to be retransmitted, the second DCI is further used to indicate a second subframe used to retransmit the first uplink CI, and the second DCI is further used to indicate that the first uplink CI is uplink CI to be retransmitted.

S1409. The network device retransmits the first uplink CI to the terminal device in the second subframe.

The retransmitted first uplink CI is also carried on the PDSCH, but is not carried in any TB.

S1410. The terminal device receives the second DCI sent by the network device, determines a subframe used to retransmit the first uplink CI, and receives the retransmitted first uplink CI in the determined subframe.

S1411. The network device determines that the first HARQ information is an ACK, and stops retransmitting the first TB.

When determining that the first HARQ information is an ACK, the network device may perform S1412.

S1412. When a change of uplink CI exceeds a preset threshold, the network device initially transmits second uplink CI to the terminal device in the second subframe, where the second uplink CI is carried on the PDSCH but is not carried in any TB.

The second subframe is a subframe that may be used to transmit downlink data when the network device determines that the change of uplink CI exceeds the preset threshold. The second uplink CI is uplink CI obtained by the network device when the change of uplink CI exceeds the preset threshold. In this embodiment of this application, the second uplink CI is different from the first uplink CI.

In this embodiment of this application, regardless of whether the network device receives the ACK of the first uplink CI, when the change of uplink CI exceeds the preset threshold, the network device initially transmits the second uplink CI to the terminal device.

It should be noted that a sequence of performing S1411 and S1412 is not limited in this embodiment of this application. S1411 may be performed before S1412, or S1412 may be performed before S1411. This is not limited in this embodiment of this application.

According to the information transmission method provided in this embodiment of this application, the network device may transmit uplink CI to the terminal device by using a PDSCH including the uplink CI; and the terminal device may feed back, to the network device on a preset dedicated PUCCH resource based on an HARQ mechanism of the PDSCH, HARQ information used to indicate whether the uplink CI is correctly received. In this way, when the HARQ information is a NACK, the network device may retransmit the uplink CI on the PDSCH, so that a success rate of indicating the uplink CI by the network device to the terminal device can be improved.

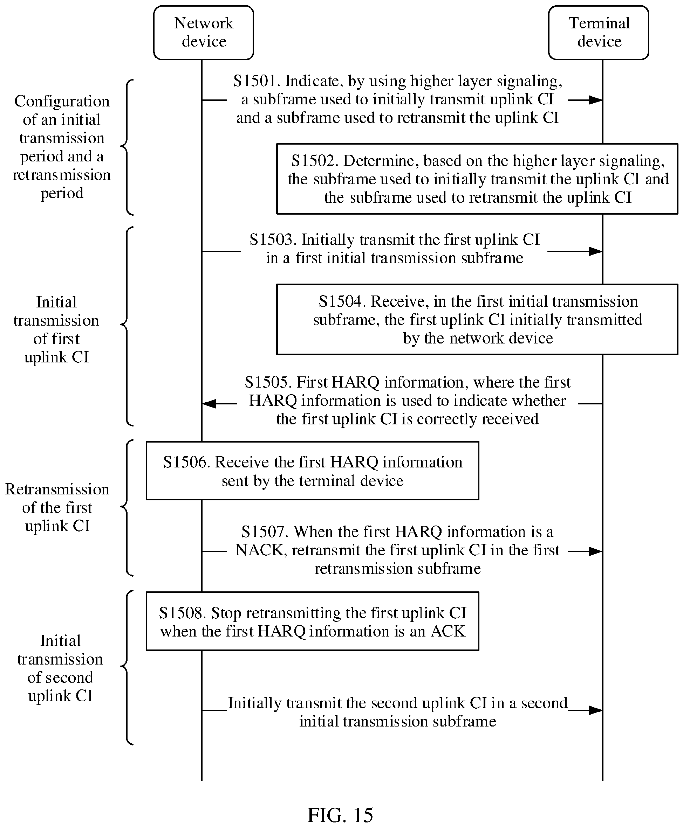

In implementation (4) of the first application scenario, the network device periodically transmits (initially transmits and retransmits) uplink CI to the terminal device. Specifically, as shown in FIG. 15, an information transmission method provided in an embodiment of this application includes S1501 to S1506.

S1501. A network device indicates, to a terminal device by using higher layer signaling, a subframe used to initially transmit uplink CI and a subframe used to retransmit the uplink CI.

In this embodiment of this application, the "subframe used to initially transmit the uplink CI" refer to a subframe carrying the uplink CI that is initially transmitted (that is, transmitted for the first time). The network device may indicate, to the terminal device by using the higher layer signaling, a subframe offset T1 of initial transmission and a transmission period P1 of initial transmission, and indicate that a subframe that meets (K ^{∗} NF + Index - T1)mod(P1) = 0 is the subframe used to initially transmit the uplink CI, that is, the initially transmitted uplink CI is transmitted in the subframe that meets (K ∗ NF + Index - T1)mod(P1) = 0. mod is a modulo operation symbol, NF is a number of a radio frame in which the subframe is located, K is a quantity of subframes included in one radio frame (for example, K=10), and Index is an index number of the subframe.

In this embodiment of this application, the "subframe used to retransmit the uplink CI" is a subframe carrying the retransmitted uplink CI. The network device may indicate, to the terminal device by using the higher layer signaling, a subframe offset T2 of retransmission and a transmission period P2 of retransmission, and indicate that a subframe that meets (K ∗ NF + Index - T2)mod(P2) = 0 is the subframe used to retransmit the uplink CI, that is, the retransmitted uplink CI is transmitted in the subframe that meets (K ∗ NF + Index - T2)mod(P2) = 0. % is a modulo operation symbol, NF is a number of a radio frame in which the subframe is located, K is a quantity of subframes included in one radio frame (for example, K=10), and Index is an index number of the subframe.

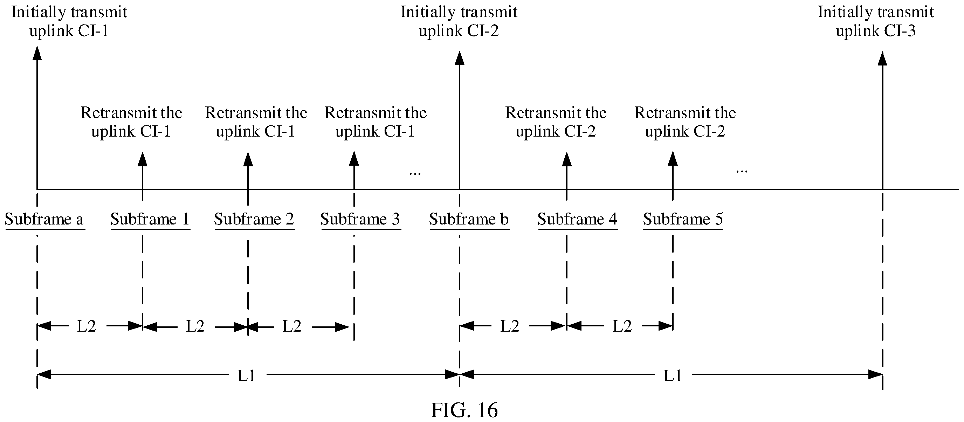

It should be noted that in this embodiment of this application, periodic initial transmission means that to adapt to a change of uplink CI, the network device initially transmits new uplink CI to the terminal device at specific intervals (for example, at intervals of M subframes). For example, as shown in FIG. 16, a time interval between a subframe a used to initially transmit uplink CI-1 and a subframe b used to initially transmit uplink CI-2 is L1, and a time interval between the subframe b used to initially transmit the uplink CI-2 and a subframe c used to initially transmit uplink CI-3 is also L1. In this embodiment of this application, periodic retransmission means that after one piece of uplink CI is initially transmitted, the uplink CI is retransmitted to the terminal device at specific intervals (for example, at intervals of N subframes), until a subframe used to initially transmit new uplink CI is reached or an ACK is received. For example, as shown in FIG. 16, after initially transmitting the uplink CI-1 in the subframe a, the network device may retransmit the uplink CI-1 in a subframe 1 with an interval of L2 from the subframe a, retransmit the uplink CI-1 in a subframe 2 with an interval of L2 from the subframe 1, and retransmit the uplink CI-1 in a subframe 3 with an interval of L2 from subframe 2.

For example, it is assumed that the subframe a, the subframe b, and the subframe c shown in FIG. 16 are subframes that meet (K ∗ NF + Index - T1)mod(P1) = 0. In this case, the network device may initially transmit different uplink CI in the subframe a, the subframe b, and the subframe c separately. It should be noted that uplink CI initially transmitted in each subframe used to initially transmit uplink CI is different. For example, the uplink CI-1 initially transmitted in the subframe a, the uplink CI-2 initially transmitted in the subframe b, and the uplink CI-3 initially transmitted in the subframe c are different.

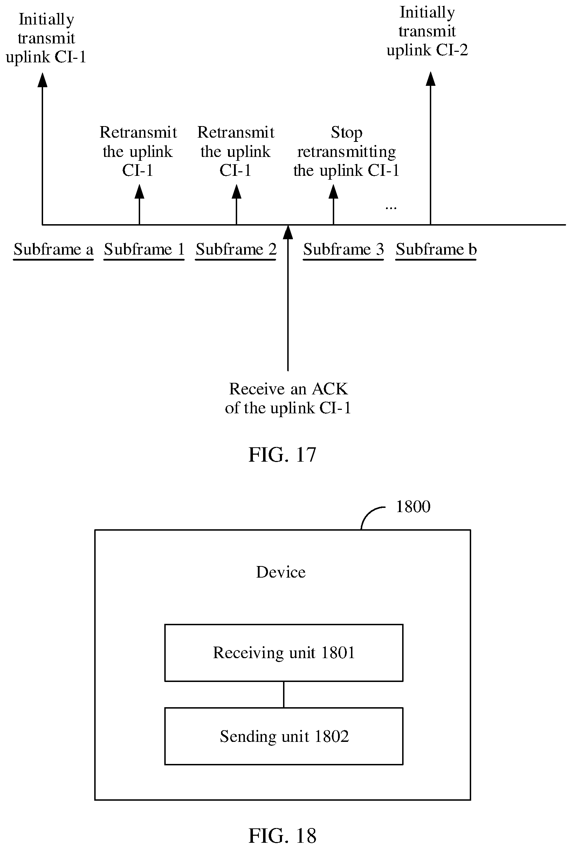

It is assumed that the subframe 1 to a subframe 5 shown in FIG. 16 are subframes that meet (K ∗ NF + Index - T2)mod(P2) = 0. In this case, the network device may retransmit the uplink CI-1 in a subframe such as the subframe 1, the subframe 2, and the subframe 3, and retransmit the uplink CI-2 in a subframe such as the subframe 4 and the subframe 5. After initially transmitting new uplink CI, the network device no longer retransmits previous uplink CI. For example, as shown in FIG. 16, after initially transmitting the uplink CI-2 in the subframe b, the network device no longer retransmits the uplink CI-1. In the subframe b or after the subframe b, even if the network device receives a NACK of the uplink CI-1, the network device does not retransmit the uplink CI-1. In addition, after the network device receives an ACK of uplink CI, the network device does not retransmit the uplink CI even if a period used to retransmit the uplink CI is reached. For example, as shown in FIG. 17, the network device initially transmits uplink CI-1 in a subframe a; after retransmitting the uplink CI-1 in a subframe 1 and a subframe 2 based on a retransmission period, the network device receives an ACK that is of the uplink CI-1 and that is sent by the terminal device. In this case, in a subframe (including a subframe 3) used to retransmit the uplink CI-1, the network device no longer retransmits the uplink CI-1.

S 1502. The terminal device determines, based on the higher layer signaling, the subframe used to initially transmit the uplink CI and the subframe used to retransmit the uplink CI.

The terminal device may receive the higher layer signaling sent by the network device, and determine, based on the subframe offset T1 of initial transmission and the transmission period P1 of initial transmission that are indicated by the higher layer signaling, and based on the condition (K * NF + Index - T1)mod(P1) = 0 that an initial transmission subframe of the uplink CI meets, that a subframe that meets (K ^{∗} NF + Index - T1)mod(P1) = 0 is the subframe used to initially transmit the uplink CI, and determine, based on the subframe offset T2 of retransmission and the transmission period P2 of retransmission that are indicated by the higher layer signaling, and based on the condition (K * NF + Index - T2)mod(P2) = 0 that a retransmission subframe of the uplink CI meets, that a subframe that meets (K * NF + Index - T2)mod(P2) = 0 is the subframe used to retransmitting the uplink CI.

It may be understood that because reliability of the higher layer signaling is far higher than that of physical layer signaling, the network device indicates, to the terminal device by using the higher layer signaling, the subframes used to initially transmit and retransmit the uplink CI, thereby improving a success rate of indicating, by the network device to the terminal device, the subframes used to initially transmit and retransmit the uplink CI.

Optionally, in this embodiment of this application, the subframe used to initially transmit the uplink CI and the subframe used to retransmit the uplink CI may alternatively be predefined in the network device and the terminal device, and do not need to be indicated by the network device to the terminal device. That is, S701 and S702 are optional.

In this embodiment of this application, the method in the embodiments of this application is described by using an example in which a subframe used to initially transmit first uplink CI is a first initial transmission subframe, a subframe used to retransmit the first uplink CI is a first retransmission subframe, a subframe used to initially transmit second uplink CI is a second initial transmission subframe, and a subframe used to retransmit the second uplink CI is a second retransmission subframe.

S1503. The network device initially transmits the first uplink CI to the terminal device in the first initial transmission subframe.

Before initially transmitting the first uplink CI to the terminal device, the network device further sends, to the terminal device, DCI used to schedule the first uplink CI to be initially transmitted.

S1504. The terminal device receives, in the first initial transmission subframe, the first uplink CI initially transmitted by the network device.

It may be understood that the terminal device may correctly receive the first uplink CI, or may not correctly receive the first uplink CI. Regardless of whether the terminal device correctly receives the first uplink CI, the terminal device feeds back first HARQ information to the network device. The first HARQ information is used to indicate whether the first uplink CI is correctly received. Specifically, after S 1504, the method in this embodiment of this application may further include S1505.

S1505. The terminal device sends the first HARQ information to the network device, where the first HARQ information is used to indicate whether the first uplink CI is correctly received.

It should be noted that for a specific method for feeding back the first HARQ information by the terminal device to the network device, refer to the detailed descriptions in S1405. Details are not described again in this embodiment of this application.

S 1506. The network device receives the first HARQ information sent by the terminal device.

When the first uplink CI is not correctly received, the first HARQ information is a NACK, and the network device retransmits the first uplink CI to the terminal device. When the first uplink CI is correctly received, the first HARQ information is an ACK, and the network device may stop retransmitting the first uplink CI and initially transmit the second uplink CI in the second initial transmission subframe.

S1507. When the first HARQ information is a NACK, the network device retransmits the first uplink CI to the terminal device in the first retransmission subframe.

Before retransmitting the first uplink CI to the terminal device, the network device further sends, to the terminal device, DCI used to schedule the first uplink CI to be retransmitted.

S 1508. When the first HARQ information is an ACK, the network device stops retransmitting the first uplink CI, and initially transmits the second uplink CI to the terminal device in the second initial transmission subframe.

Before initially transmitting the second uplink CI to the terminal device, the network device further sends, to the terminal device, DCI used to schedule the second uplink CI to be initially transmitted.

According to the information transmission method provided in this embodiment of this application, the network device may transmit uplink CI to the terminal device by using a PDSCH including the uplink CI; and the terminal device may feed back, to the network device on a preset dedicated PUCCH resource based on an HARQ mechanism of the PDSCH, HARQ information used to indicate whether the uplink CI is correctly received. In addition, the network device may periodically transmit new uplink CI to the terminal device on the PDSCH, periodically retransmit the uplink CI to the terminal device, and stop retransmitting the uplink CI when the HARQ information is an ACK, so that a success rate of indicating the uplink CI by the network device to the terminal device can be improved.

It should be noted that in this embodiment of this application, an example in which a resource used to transmit first control information (for example, uplink CI) is divided into a plurality of time units in time domain, one time unit includes one or more subframes, and the network device and the terminal device transmit the first control information in each subframe is merely used to describe the method in this embodiment of this application, and it is not indicated that in the plurality of time units obtained by dividing, in time domain, the resource used by the network device and the terminal device to transmit the first control information, a length of each time unit may only be set to one or more subframes. In this embodiment of this application, in the plurality of time units obtained by dividing, in time domain, the resource used by the network device and the terminal device to transmit the first control information, a length of each time unit may be randomly set. This is not particularly limited in this embodiment of this application. For detailed descriptions of the time unit in this embodiment of this application, refer to the detailed descriptions of the term "time unit in time domain" in the embodiments of this application. Details are not described herein again.

It may be understood that to implement the foregoing functions, the first device, the second device, and the like include corresponding hardware structures and/or software modules for performing each of the functions. A person of ordinary skill in the art should easily be aware that, in combination with the examples described in the embodiments disclosed in this specification, units, algorithms, and steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the embodiments of this application.

In the embodiments of this application, the terminal, the server, and the like may be divided into functional modules based on the foregoing method examples. For example, various functional modules corresponding to various functions may be obtained through division, or two or more functions may be integrated into one processing module. The integrated module may be implemented in a form of hardware, or may be implemented in a form of a software functional module. It should be noted that, in this embodiment of this application, module division is an example, and is merely a logical function division. In actual implementation, another division manner may be used.

In a case of dividing functional modules corresponding to the functions, as shown in FIG. 18, an embodiment of this application provides a device 1800. The device 1800 includes a receiving unit 1801 and a sending unit 1802.

In a first case, in this embodiment of this application, each unit module in the device 1800 is described herein by using an example in which the device 1800 is the first device in the foregoing method embodiments.

The receiving unit 1801 is configured to support the device 1800 in performing S502, S705, S706, S803, S1103, S1104, S1204, S1403, S1404, S1410, and S1504 in the foregoing method embodiments, and/or used in another process of the technology described in this specification. The sending unit 1802 is configured to support the device 1800 in performing S503, S701, S708, S1106, S1405, and S1505 in the foregoing method embodiments, and/or used in another process of the technology described in this specification.

Further, the device 1800 may further include a first determining unit and a second determining unit. The first determining unit is configured to support the device 1800 in performing S702 and S 1502 in the foregoing method embodiments, and/or used in another process of the technology described in this specification. The second determining unit is configured to support the device 1800 in determining a size of uplink CI, and/or used in another process of the technology described in this specification.

Further, the device 1800 may further include an obtaining unit. The obtaining unit is configured to support the device 1800 in performing S707 and S 1105 in the foregoing method embodiments, and/or used in another process of the technology described in this specification.

Certainly, the device 1800 includes but is not limited to the listed unit modules. For example, the device 1800 may further include a storage unit configured to store the first control information. In addition, specific functions that can be implemented by the foregoing functional units include, but are not limited to, the functions corresponding to the method steps in the foregoing examples. For detailed descriptions of another unit of the device 1800, refer to the detailed descriptions of method steps corresponding to the unit, and details are not described herein again in this embodiment of this application.

When an integrated unit is used, the first determining unit, the second determining unit, the obtaining unit, and the like may be integrated into one processing module, the receiving unit 1801 and the sending unit 1802 may be RF circuits of the first device, and the storage unit may be a storage module of the first device.

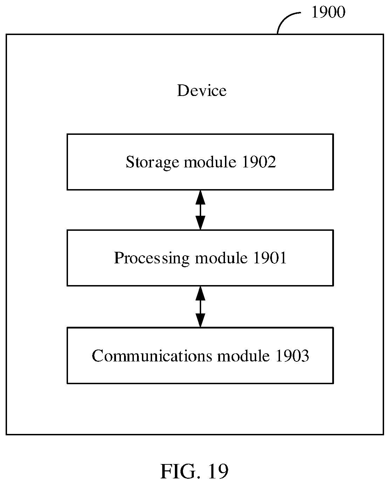

FIG. 19 is a schematic diagram of a possible structure of a device according to an embodiment of this application. The device 1900 includes a processing module 1901, a storage module 1902, and a communications module 1903.

The processing module 1901 is configured to control and manage the device 1900. The storage module 1902 is configured to store program code and data of the device 1900. The communications module 1903 is configured to communicate with another device. For example, the communications module is configured to receive data sent by the another device or send data to the another device.

The processing module 1901 may be a processor or a controller, such as a CPU, a general-purpose processor, a digital signal processor (Digital Signal Processing, DSP), an application-specific integrated circuit (Application-Specific Integrated Circuit, ASIC), a field programmable gate array (Field-Programmable Gate Array, FPGA), or another programmable logical device, a transistor logical device, a hardware component, or any combination thereof. The processor may implement or execute various example logical blocks, modules, and circuits described with reference to content disclosed in this application. The processor may be a combination of processors implementing a computing function, for example, a combination of one or more microprocessors, or a combination of the DSP and a microprocessor. The communications module 1903 may be a transceiver, a transceiver circuit, a communications interface, or the like. The storage module 1902 may be a memory.

When the processing module 1901 is a processor (the processor 31 and the processor 35 shown in FIG. 3), the communications module 1904 is an RF circuit (the communications interface 33 shown in FIG. 3), the storage module 1902 is a memory (the memory 32 shown in FIG. 3), and the device provided in this application may be the UE shown in FIG. 3. The processor, the communications interface, and the memory may be coupled together by using a bus.

In a second case, in this embodiment of this application, each unit module in the device 1800 is described herein by using an example in which the device 1800 is the second device in the foregoing method embodiments.

The receiving unit 1801 is configured to support the device 1800 in performing S504, S709, S1107, S1406, and S1506 in the foregoing method embodiments, and/or used in another process of the technology described in this specification. The sending unit 1802 is configured to support the device 1800 in performing the operation of "initially transmitting the second uplink CI" in S501, S505, S506, S701, S703, S704, S801, S802, S901, S1101, S1102, S1202, S1203, S1302, S1401, S1402, S1408, S1409, S1412, S1501, S1503, S1507, and S1508 in the foregoing method embodiments, and/or used in another process of the technology described in this specification

Further, the device 1800 may include a determining unit. The determining unit is configured to support the device 1800 in performing S 1201, S 1301, S 1407, and S1411 in the foregoing method embodiments, and/or used in another process of the technology described in this specification.

Certainly, in the second case, the device 1800 includes but is not limited to the listed unit modules. For example, the device 1800 may further include a storage unit configured to store the first control information. In addition, specific functions that can be implemented by the foregoing functional units include, but are not limited to, the functions corresponding to the method steps in the foregoing examples. For detailed descriptions of another unit of the device 1800, refer to the detailed descriptions of method steps corresponding to the unit, and details are not described herein again in this embodiment of this application.

When an integrated unit is used, the determining unit may be implemented in a processing module, the receiving unit 1801 and the sending unit 1802 may be RF circuits of the second device, and the storage unit may be a storage module of the second device. The second device may be the device 1900 shown in FIG. 19. When the processing module 1901 is a processor (the processor 21 and the processor 25 shown in FIG. 2), the communications module 1904 is an RF circuit (the communications interface 23 shown in FIG. 2), the storage module 1902 is a memory (the memory 22 shown in FIG. 2), and the device provided in this application may be the base station shown in FIG. 2. The processor, the communications interface, and the memory may be coupled together by using a bus.

An embodiment of this application further provides a computer storage medium. The computer storage medium stores computer program code. When the processors execute the computer program code, the device performs related method steps in any one of FIG. 5, FIG. 7, FIG. 11, FIG. 14, and FIG. 15, to implement the methods in the foregoing embodiments.

An embodiment of this application further provides a computer program product. When the computer program product is run on a computer, the computer is enabled to perform related method steps in any one of FIG. 5, FIG. 7, FIG. 11, FIG. 14, and FIG. 15, to implement the methods in the foregoing embodiments.

The device 1800, the device 1900, the computer storage medium, or the computer program product provided in this application is configured to perform the corresponding methods provided above. Therefore, for beneficial effects that can be achieved by the device 1800, the device 1900, the computer storage medium, or the computer program product, refer to beneficial effects of the corresponding methods provided above, and details are not described herein again.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of this application. The foregoing storage medium includes: any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information transmission method, comprising:
receiving, by a first device, first control information sent by a second device; and
sending, by the first device, receiving status information, wherein the receiving status information indicates whether the first control information is correctly received.

2. The method according to claim 1, wherein the first control information is carried in a transport block TB, and the TB further comprises downlink data.

3. The method according to claim 2, wherein the method further comprises:
determining, by the first device based on higher layer signaling, physical layer signaling, or a predefinition, a subframe used to initially transmit the first control information, wherein
the TB is scheduled by using second control information, the second control information is downlink control information DCI, the DCI further comprises a hybrid automatic repeat request HARQ identifier and a new data indicator NDI, and the HARQ identifier and the NDI are used to indicate a subframe used to retransmit the first control information.

4. The method according to claim 3, wherein the determining, by the first device based on higher layer signaling or a predefinition, a subframe used to initially transmit the first control information comprises:
determining, by the first device based on the higher layer signaling or the predefinition, a subframe offset T and a transmission period P; and
determining, by the first device, that a subframe that meets (K * NF + Index - T)mod(P) = 0 is the subframe used to initially transmit the first control information, wherein
mod is a modulo operation symbol, K is a quantity of subframes comprised in one radio frame, NF is a number of a radio frame in which the subframe is located, and Index is an index number of the subframe.

5. The method according to any one of claims 2 to 4, wherein the method further comprises:
determining, by the first device based on higher layer signaling or physical layer signaling, a size of the first control information.

6. The method according to claim 1, wherein the first control information is carried on a physical downlink shared channel PDSCH, the PDSCH further comprises a TB, and the first control information is not carried in any TB.

7. The method according to claim 6, wherein the method further comprises:
determining, by the first device based on physical layer signaling, a subframe used to transmit the first control information, wherein the physical layer signaling further indicates whether the first control information is initially transmitted control information or retransmitted control information.

8. The method according to any one of claims 1 to 7, wherein the first device is a terminal device, the second device is a network device, the receiving status information is HARQ information, and the first control information is uplink channel information CI.

9. An information transmission method, comprising:
sending, by a second device, first control information to a first device; and
receiving, by the second device, receiving status information sent by the first device, wherein the receiving status information indicates whether the first control information is correctly received.

10. The method according to claim 9, wherein the first control information is carried in a transport block TB, and the TB further comprises downlink data.

11. The method according to claim 10, further comprising:
indicating, by the second device by using higher layer signaling or physical layer signaling to the first device, a subframe used to initially transmit the first control information; and
scheduling, by the second device by using second control information, the TB, wherein the second control information is downlink control information DCI, the DCI further comprises a hybrid automatic repeat request HARQ identifier and a new data indicator NDI, and the HARQ identifier and the NDI are used to indicate a subframe used to retransmit the first control information.

12. The method according to claim 11, wherein the indicating, by the second device by using higher layer signaling to the first device, a subframe used to initially transmit the control information comprises:
indicating, by the second device by using the higher layer signaling to the first device, a subframe offset T and a transmission period P; and
initially transmitting, by the second device, the first control information to the first device in a subframe that meets (K ^{∗} NF + Index - T)mod(P) = 0, wherein first control information transmitted by the second device in different subframes that meet (10 * NF + Index - T)%P = 0 is different, wherein
mod is a modulo operation symbol, NF is a number of a radio frame in which the subframe is located, K is a quantity of subframes comprised in one radio frame, and Index is an index number of the subframe.

13. The method according to any one of claims 10 to 12, wherein the method further comprises:
indicating, by the second device by using higher layer signaling, a size of the first control information to the first device.

14. The method according to claim 9, wherein the first control information is carried on a physical downlink shared channel PDSCH, the PDSCH further comprises a TB, and the first control information is not carried in any TB.

15. The method according to claim 14, wherein the method further comprises:
indicating, by the second device by using physical layer signaling to the first device, transmission indication information and a subframe used to transmit the first control information, wherein the transmission indication information is used to indicate whether the first control information is initially transmitted control information or retransmitted control information.

16. The method according to any one of claims 9 to 15, wherein the first device is a terminal device, the second device is a network device, the receiving status information is HARQ information, and the control information is uplink channel information CI.

17. A device, wherein the device is a first device, and the device comprises a processor, a memory, and a communications interface; the memory and the communications interface are coupled to the processor, the memory is configured to store computer program code, the computer program code comprises a computer instruction, and the memory comprises a non-volatile storage medium; and when the processor executes the computer instruction,
the communications interface is configured to receive first control information sent by a second device, and send receiving status information, wherein the receiving status information indicates whether the communications interface correctly receives the first control information.

18. The device according to claim 17, wherein the first control information is carried in a transport block TB, and the TB further comprises downlink data.

19. The device according to claim 18, wherein the communications interface is further configured to receive higher layer signaling sent by the second device; and
the processor is further configured to determine, based on the higher layer signaling, physical layer signaling, or a predefinition, a subframe used to initially transmit the first control information, wherein
the TB is scheduled by using second control information, the second control information is downlink control information DCI, the DCI further comprises a hybrid automatic repeat request HARQ identifier and a new data indicator NDI, and the HARQ identifier and the NDI are used to indicate a subframe used to retransmit the first control information.

20. The device according to claim 19, wherein the processor is specifically configured to determine, based on the higher layer signaling or the predefinition, a subframe offset T and a transmission period P, and determine that a subframe that meets (K ^{∗} NF + Index - T)mod(P) = 0 is the subframe used to initially transmit the first control information, wherein
mod is a modulo operation symbol, K is a quantity of subframes comprised in one radio frame, NF is a number of a radio frame in which the subframe is located, and Index is an index number of the subframe.

21. The device according to any one of claims 18 to 20, wherein the processor is further configured to determine a size of the first control information based on higher layer signaling or physical layer signaling.

22. The device according to claim 17, wherein the first control information is carried on a physical downlink shared channel PDSCH, the PDSCH further comprises a TB, and the first control information is not carried in any TB.

23. The device according to claim 21, wherein the processor is further configured to determine, based on physical layer signaling, a subframe used to transmit the first control information, and determine whether the first control information is initially transmitted control information or retransmitted control information.

24. The device according to any one of claims 17 to 23, wherein the first device is a terminal device, the second device is a network device, the receiving status information is HARQ information, and the first control information is uplink channel information CI.

25. A device, wherein the device is a second device, and the device comprises a processor, a memory, and a communications interface; the memory and the communications interface are coupled to the processor, the memory is configured to store computer program code, the computer program code comprises a computer instruction, and the memory comprises a non-volatile storage medium; and when the processor executes the computer instruction,
the communications interface is configured to send first control information to a first device, and receive receiving status information sent by the first device, wherein the receiving status information indicates whether the first control information is correctly received.

26. The device according to claim 25, wherein the first control information is carried in a transport block TB, and the TB further comprises downlink data.

27. The device according to claim 26, wherein the communications interface is further configured to send higher layer signaling or physical layer signaling to the first device, wherein the higher layer signaling or the physical layer signaling is used to indicate a subframe used to initially transmit the first control information; and
the communications interface is further configured to send second control information to the first device, wherein the second control information is used to schedule the TB, the second control information is downlink control information DCI, the DCI further comprises a hybrid automatic repeat request HARQ identifier and a new data indicator NDI, and the HARQ identifier and the NDI are used to indicate a subframe used to retransmit the first control information.

28. The device according to claim 27, wherein the communications interface is further configured to indicate, by using the higher layer signaling, a subframe offset T and a transmission period P to the first device;
the processor is further configured to determine a subframe that meets (K ^{∗} NF + Index - T)mod(P) = 0, wherein mod is a modulo operation symbol, NF is a number of a radio frame in which the subframe is located, K is a quantity of subframes comprised in one radio frame, and Index is an index number of the subframe; and
the communications interface is further configured to initially transmit, in the subframe that is determined by the processor and that meets (K ^{∗} NF + Index - T)%P = 0, the first control information to the first device.

29. The device according to any one of claims 26 to 28, wherein the communications interface is further configured to indicate, by using higher layer signaling, a size of the first control information to the first device.

30. The device according to claim 25, wherein the first control information is carried on a physical downlink shared channel PDSCH, the PDSCH further comprises a TB, and the first control information is not carried in any TB.

31. The device according to claim 30, wherein the communications interface is further configured to indicate, to the first device by using physical layer signaling, transmission indication information and a subframe used to transmit the first control information, wherein the transmission indication information is used to indicate whether the first control information is initially transmitted control information or retransmitted control information.

32. The device according to any one of claims 25 to 31, wherein the first device is a terminal device, the second device is a network device, the receiving status information is HARQ information, and the control information is uplink channel information CI.

33. A computer storage medium, wherein the computer storage medium comprises a computer instruction; and when the computer instruction is run on a device, the device is enabled to perform the method according to any one of claims 1 to 16.

34. A computer program product, wherein when the computer program product is run on a computer, the computer is enabled to perform the method according to any one of claims 1 to 16.
